Europäisches Patentamt

European Patent Office

Office européen des brevets

(19)

(11) **EP 0 852 725 B1**

(12) **FASCICULE DE BREVET EUROPEEN**

(45) Date de publication et mention
de la délivrance du brevet:
**17.07.2002 Bulletin 2002/29**

(51) Int Cl.⁷: **G01P 5/00**, G01F 1/66

(21) Numéro de dépôt: **96932644.6**

(86) Numéro de dépôt international:
**PCT/FR96/01491**

(22) Date de dépôt: **24.09.1996**

(87) Numéro de publication internationale:
**WO 97/12248 (03.04.1997 Gazette 1997/15)**

(54) **PROCEDE DE MESURE ACOUSTIQUE D'UN DEBIT DE FLUIDE**

VORRICHTUNG ZUR AKUSTISCHEN MESSUNG DES DURCHFLUSSES EINER FLÜSSIGKEIT

METHOD FOR ACOUSTICALLY MEASURING A FLUID FLOW RATE

(84) Etats contractants désignés:
**DE DK ES FR GB IT NL SE**

(30) Priorité: **25.09.1995 FR 9511221**

(43) Date de publication de la demande:
**15.07.1998 Bulletin 1998/29**

(73) Titulaire: **SCHLUMBERGER INDUSTRIES S.A.**
**92120 Montrouge (FR)**

(72) Inventeurs:
• **BENETEAU, Lionel**
**F-92120 Montrouge (FR)**
• **FROELICH, Benoît**
**F-78160 Marly-le-Roi (FR)**

(74) Mandataire: **Feray, Valérie et al**
**Cabinet FERAY/LENNE**
**44/52, Rue de la Justice**
**75020 Paris (FR)**

(56) Documents cités:
**EP-A- 0 028 027        EP-A- 0 426 309**
**EP-A- 0 670 477**

**EP 0 852 725 B1**

## Description

L'invention est relative à un procédé de mesure d'un débit de fluide entre deux points espacés dans la direction d'un écoulement du fluide selon lequel le débit est obtenu en combinant une mesure des temps de propagation de deux signaux acoustiques émis entre les deux points dans des directions opposées avec une mesure des déphasages acoustiques induits dans chaque signal acoustique par la propagation de chacun desdits signaux acoustiques dans l'écoulement.

Il est connu depuis de nombreuses années de mesurer le débit d'un fluide (ou son volume) s'écoulant dans une conduite en utilisant la propagation de signaux acoustiques émis entre deux transducteurs acoustiques situés en des points espacés dans la direction de l'écoulement du fluide.

En principe, un signal acoustique émis du premier transducteur vers le second transducteur, est reçu par ce second transducteur et le temps de propagation T1 de ce signal acoustique est mesuré.

De même, on mesure le temps de propagation T2 d'un signal acoustique émis du second transducteur vers le premier transducteur après réception dudit signal par ce premier transducteur.

Le débit du fluide Q dans une conduite peut alors s'écrire de la manière suivante :

$$Q=(SL/2)(T2-T1)/T1T2,$$

où S désigne la section moyenne de passage offerte à l'écoulement entre les deux transducteurs acoustiques et L désigne la distance séparant les transducteurs.

Or, la mesure précise du temps de propagation d'un signal acoustique présente une certaine complexité de mise en oeuvre qui est fonction de la précision recherchée.

Pour ces raisons , la méthode de mesure de phase est préférable à la seule méthode de mesure du temps de propagation puisque la mesure de phase permet d'obtenir plus simplement la précision voulue sur la mesure du débit. La demande de brevet européen n°0426309 décrit d'ailleurs une méthode de mesure du débit d'un fluide, utilisable dans un compteur de fluide, et combinant une mesure des temps de propagation de deux signaux acoustiques émis entre deux points espacés dans la direction de l'écoulement du fluide dans des directions opposées avec une mesure des déphasages acoustiques induits dans chaque signal acoustique par la propagation de chacun desdits signaux acoustiques dans l'écoulement .

Le débit du fluide Q dans une conduite peut s'écrire de la manière suivante:

$$Q=(SL/4\pi Fac)\ (2\pi[Fac(T2-T1)]+(\varphi2-\varphi1))/T1T2,$$

où T1 et T2 représentent respectivement les temps de propagation d'un signal acoustique émis dans le sens aval et dans le sens amont de l'écoulement du fluide, $\varphi1$ et $\varphi2$ représentent respectivement les déphasages acoustiques induits dans chacun des signaux acoustiques en raison de la propagation de ces signaux et Fac représente la fréquence desdits signaux acoustiques.

Cette expression permet de mettre en évidence un premier terme, $2\pi[Fac(T2-T1)]$, qui détermine le nombre de périodes entières existant dans la différence des temps de propagation. L'expression [x] désigne la partie entière de x. Un second terme, $\varphi2-\varphi1$, détermine le déphasage précis, compris entre $-2\pi$ et $2\pi$, qui affecte le signal acoustique lors de sa propagation et qui est dû à la présence d'un débit de fluide entre les transducteurs. Ce second terme permet d'affiner la mesure et donc d'obtenir une mesure de débit plus précise. La grandeur T1T2 qui apparaît au dénominateur de la formule du débit correspond au carré du temps de propagation moyen des ondes acoustiques émises dans les sens amont et aval.

Étant donné que T1=L / c-v et T2=L / c+v, où c et v représentent respectivement la vitesse de propagation du signal acoustique et la vitesse du fluide, et comme la vitesse de propagation du signal dépend principalement de la température qui varie peu lors des mesures de débit, le terme T1T2 varie peu pour une composition de fluide donnée et, par conséquent, ce terme n'est pas recalculé à chaque nouvelle mesure.

Dans ce document, une première mesure d'un temps de propagation d'un signal acoustique est effectuée en inversant la phase à un endroit déterminé du signal d'émission et en détectant sur le signal reçu l'instant correspondant à cette inversion de phase. La détection de cet instant est réalisée au moyen d'un détecteur de phase instantané. Cette mesure effectuée dans les sens amont et aval fournit le premier terme de l'expression indiquée ci-dessus : $2\pi[Fac(T2-T1)]$.

Après avoir échantillonné dans huit capacités le signal reçu et converti numériquement ledit signal échantillonné, la mesure du déphasage acoustique est effectuée en réalisant une détection synchrone de ce signal numérisé, ce qui permet de déterminer le déphasage $\varphi1$ ou $\varphi2$ qui s'interprète comme la différence de phase entre la phase du signal échantillonné et la phase d'un signal de référence .

Après avoir déterminé les déphasages acoustiques correspondant aux sens aval φ1 et amont φ2 suivant cette méthode, on détermine par différence le terme φ2-φ1.

Ainsi, en additionnant les deux termes 2π[Fac(T2-T1)] et φ2-φ1 ,le débit de fluide est déterminé de manière plus précise qu'auparavant.

Toutefois, dans certaines applications où la consommation énergétique doit être aussi réduite que possible notamment parce que la source énergétique est une pile et que sa durée de vie est limitée, il est nécessaire de chercher à minimiser cette consommation.

En outre, cette méthode de détermination du débit de fluide est plutôt compliquée à mettre en oeuvre et impose d'importants volumes de calcul numérique.

La présente invention propose donc un procédé de mesure d'un débit de fluide dont la consommation énergétique est réduite par rapport aux techniques connues de l'art antérieur.

La présente invention a ainsi pour objet un procédé de mesure d'un débit de fluide entre deux points espacés dans la direction d'un écoulement du fluide selon lequel le débit est obtenu en combinant une mesure des temps de propagation respectifs de chacun des deux signaux acoustiques émis entre les deux points dans des sens opposés avec une mesure des déphasages acoustiques respectivement induits dans chaque signal acoustique par la propagation de chacun desdits signaux acoustiques dans l'écoulement, la mesure du déphasage acoustique induit dans chaque signal acoustique consistant à échantillonner ledit signal acoustique reçu à une fréquence dite d'échantillonnage, à numériser le signal échantillonné et à déterminer par détection synchrone le déphasage acoustique comme étant la différence de phase entre la phase du signal échantillonné et la phase d'un signal de référence, caractérisé en ce que, l'on procède par itérations successives sur les différents signaux acoustiques émis successivement dans le même sens de propagation, en introduisant lors d'une itération d'ordre n+1 dans l'un desdits signaux, entre l'étape d'émission du signal et l'étape de détection synchrone, au moins un déphasage programmable τp(n) asservi à la valeur du déphasage acoustique φ(n)+φref déterminée par détection synchrone effectuée lors de l'itération précédente d'ordre n, sur le signal émis précédemment, et qui est égale à la somme, d'une part, de la différence de phase φerr(n) entre la phase du signal échantillonné lors de l'itération précédente d'ordre n et la phase du signal de référence et, d'autre part, du déphasage programmable introduit lors de l'itération d'ordre n, 2πFacτp(n-1) où Fac représente la fréquence du signal acoustique et τp(n-1) représente le retard programmable déterminé à l'itération d'ordre n-1, de telle manière que l'étape de détection synchrone de l'itération d'ordre n+1 détermine une différence de phase φerr(n+1) entre la phase du signal échantillonné lors de l'itération en cours et la phase de référence qui soit aussi proche de zéro que possible, le déphasage acoustique φ(n+1)+φref étant ainsi sensiblement égal au déphasage programmable introduit lors de l'itération d'ordre n+1, 2πFacτp(n).

Ce procédé est simple à mettre en oeuvre et très souple d'utilisation.

En effet, le déphasage programmable qui est en fait un retard introduit dans le signal peut être ainsi affecté audit signal à l'étape du procédé que l'on souhaite sans pour autant changer la nature et diminuer l'efficacité dudit procédé.

Avantageusement, le déphasage programmable peut être introduit lors de l'étape d'échantillonnage dans le signal dit d'échantillonnage.

Par ailleurs, lors de l'étape de détection synchrone, le signal numérisé est multiplié par des signaux de référence ayant la forme respective d'un sinus et d'un cosinus dits de référence qui possèdent une phase de référence, et le déphasage programmable peut alors être introduit dans les sinus et cosinus de référence.

Il est également possible de prévoir que le déphasage programmable est introduit lors de l'étape d'émission du procédé, dans un signal dit d'émission qui est destiné à générer le signal acoustique correspondant.

Afin de réduire la consommation énergétique, on pratique l'hétérodynage sur le signal acoustique reçu en mélangeant ledit signal reçu avec un signal dit de mélange afin d'obtenir un signal dit mélangé dont la fréquence est réduite, et le déphasage programmable peut alors être introduit dans le signal de mélange.

Selon une caractéristique de l'invention le déphasage programmable est décomposé en au moins deux sous déphasages programmables introduits dans le signal, chacun à une étape distincte du procédé, entre l'étape d'émission du signal acoustique et l'étape de détection synchrone.

Préférentiellement, chaque sous déphasage programmable est déterminé en effectuant la division euclidienne du déphasage programmable modulo la résolution du déphaseur programmable associé à l'étape correspondante à laquelle sera introduit ledit sous déphasage.

Par exemple, le déphasage programmable est décomposé en deux sous déphasages programmables introduits respectivement dans le signal d'échantillonnage et dans les sinus et cosinus de référence .

Pour résoudre davantage les problèmes de consommation énergétique la fréquence d'échantillonnage Fe est égale à 4Fac / 2n+1, où Fac représente la fréquence du signal acoustique et n est un entier supérieur ou égal à zéro.

Avec la fréquence d'échantillonnage Fe choisie égale à 4Fac, le déphasage programmable décomposé en deux sous déphasages programmables introduits respectivement dans le signal d'échantillonnage et dans les sinus et cosinus de référence est sensiblement égal à m(Fac/Fq)360° + k(Fac/Fe)360°, où (Fac/Fq)360° représente la résolution du déphaseur programmable associé aux sinus et cosinus de référence et (Fac/Fe)360° représente la résolution due à l'échantillonnage,

Fq représentant la plus haute fréquence d'une horloge utilisée pour la mise en oeuvre dudit procédé.

Afin de réduire encore davantage la consommation énergétique du procédé en diminuant le temps et le volume de calcul, la fréquence d'échantillonnage Fe est égale à 4Fac/2n+1 avec n strictement supérieur à zéro. Avantageusement, les étapes d'échantillonnage et de numérisation sont effectuées simultanément.

Par ailleurs, le débit de fluide s'exprimant en fonction du rapport d'un premier terme qui est égal à la somme, d'une part, de 2π[Fac(T2-T1)] où [x] désigne la partie entière de x et où T1 et T2 sont les temps de propagation respectifs des signaux acoustiques émis dans les deux sens de propagation Fac étant la fréquence des signaux acoustiques et, d'autre part, de la différence des déphasages acoustiques induits dans chaque signal, sur un second terme qui est égal au produit desdits temps de propagation, on effectue une mesure des temps de propagation par une méthode différente pour chacun des premier et second termes.

On mesure les temps de propagation des signaux acoustiques dans le premier terme plus fréquemment que pour ceux du second terme.

On mesure les temps de propagation des signaux acoustiques dans le second terme lorsque la moyenne des temps de propagation émis dans les deux sens de propagation et exprimés dans le premier terme dépasse un seuil prédéterminé.

On mesure les temps de propagation des signaux acoustiques dans le second terme lorsque le nombre de mesures de déphasages acoustiques atteint un nombre maximal prédéterminé .

On mesure les temps de propagation des signaux acoustiques dans le second terme lorsque la première des deux conditions précédentes est satisfaite.

Pour mesurer le temps de propagation des signaux acoustiques émis dans les deux sens de propagation dans le premier terme, pour chaque signal, on redresse ledit signal reçu, on forme l'enveloppe de ce signal reçu et l'on détermine ledit temps de propagation en repérant l'instant de passage de ladite enveloppe par un seuil prédéterminé.

Pour mesurer le temps de propagation des signaux acoustiques émis dans les deux sens de propagation dans le second terme, on compare les valeurs des amplitudes de chacun desdits signaux acoustiques aux points échantillonnés à une valeur dite de seuil, on recherche le premier point échantillonné du signal dont la valeur est supérieure à la ladite valeur seuil et, à partir de ce point, on recherche le prochain ou le dernier passage à zéro du signal, ce qui détermine ainsi le temps de propagation dudit signal acoustique à un temps constant près qui est le même pour les deux temps de propagation.

Pour rechercher le prochain passage à zéro du signal, on recherche les deux points échantillonnés consécutifs suivants qui encadrent le point du signal pour lequel la valeur de l'amplitude est nulle et l'on procède alors à une interpolation linéaire entre ces deux points pour déterminer le temps de propagation du signal acoustique.

Selon une variante de réalisation de l'invention, à chaque itération d'ordre n on ajoute au retard programmable τp(n) un retard programmable supplémentaire R(n) qui va induire sur plusieurs itérations successives une erreur de phase E due au repliement de raies harmoniques après échantillonnage, répartie suivant une loi périodique à moyenne nulle.

Ainsi, en imposant un retard programmable supplémentaire l'erreur va être distribuée selon une loi sinusoïdale à moyenne nulle et va donc se compenser sur plusieurs tirs acoustiques successifs.

D'autres caractéristiques et avantages apparaîtront au cours de la description qui va suivre, donnée à titre d'exemple non limitatif et faite en référence aux dessins annexés sur lesquels :

- la figure 1 est un organigramme représentant les différentes étapes du procédé selon un mode de réalisation de l'invention,
- la figure 2 est un organigramme représentant les différentes étapes du procédé qui sont mises en oeuvre à chaque émission de signal acoustique et qui sont incluses dans l'étape de mesure de déphasage acoustique, représentée par l'étape d sur la figure 1,
- la figure 2a illustre le résultat des différentes mesures successives du déphasage acoustique effectuées selon les étapes du procédé de la figure 2,
- la figure 2b indique les valeurs numériques obtenues dans l'exemple représenté à la figure 2a,
- la figure 3 est une vue schématique simplifiée d'un circuit électronique utilisé pour la mise en oeuvre du procédé selon un mode de réalisation de l'invention,
- la figure 3a illustre la méthode de détermination du temps de propagation d'un signal acoustique par passage à zéro,
- la figure 3b est une vue schématique agrandie du circuit électronique de la figure 3 utilisé pour déterminer le temps de propagation d'un signal acoustique par la méthode dite de l'enveloppe avec l'allure des signaux correspondants à chaque étape,

- la figure 4 est une vue schématique partielle détaillée du circuit électronique de la figure 3 selon un mode de réalisation de l'invention dans lequel un déphasage programmable est introduit lors de l'étape d'échantillonnage du signal acoustique reçu,
- la figure 4a représente l'évolution simultanée dans le temps des différents signaux utilisés pour l'échantillonnage du signal lorsque le déphasage programmable est introduit lors de l'étape d'échantillonnage du signal acoustique reçu,
- la figure 5 est une vue schématique partielle détaillée du circuit électronique de la figure 3 selon une première variante de réalisation de l'invention dans laquelle un déphasage programmable est introduit en partie lors de l'étape d'échantillonnage et en partie dans les signaux de référence utilisés pour l'étape de détection synchrone,
- la figure 6 est une vue schématique partielle détaillée du circuit électronique de la figure 3 selon une deuxième variante de réalisation de l'invention dans laquelle un déphasage programmable est introduit lors de l'étape d'émission du signal acoustique,
- la figure 6a représente l'évolution simultanée dans le temps des différents signaux utilisés pour l'échantillonnage lorsque le déphasage programmable est introduit lors de l'étape d'émission du signal acoustique,
- la figure 7 est une vue schématique partielle détaillée du circuit électronique de la figure 3 selon une troisième variante de réalisation de l'invention dans laquelle un déphasage programmable est introduit lors de l'étape d'hétérodynage du signal acoustique reçu,
- la figure 8 représente les valeurs des points échantillonnés des sinus et (cosinus) de référence pour deux fréquences d'échantillonnage différentes,
- la figure 9 est une variante de l'organigramme de la figure 2,
- la figure 10 montre sur la courbe représentant le signal acoustique les différents points d'échantillonnage obtenus en appliquant à chaque itération d'ordre n un retard supplémentaire R(n) au retard programmable τp(n) illustré à la figure 2 (douze itérations au total).
- la figure 11 montre pour chacune des itérations représentées à la figure 10 une courbe représentant l'erreur de phase E due au repliement des raies harmoniques après échantillonnage en fonction du retard programmable τp (n) + R(n) appliqué.

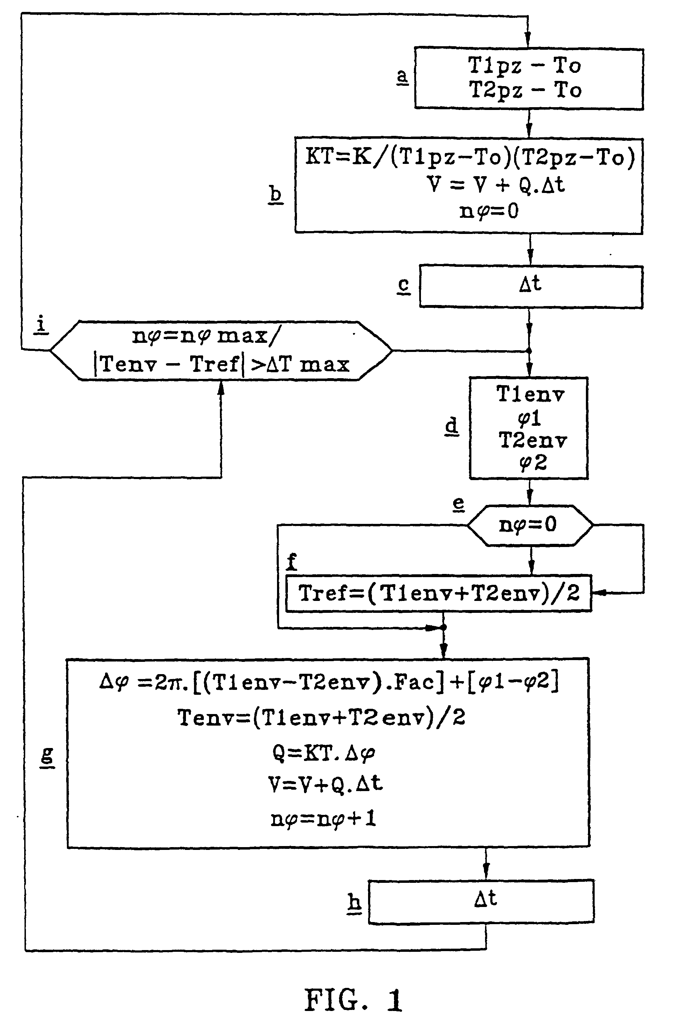

Sur la figure 1 est représenté un organigramme qui comporte les différentes étapes du procédé de mesure d'un débit de fluide en écoulement dans une conduite, par exemple un gaz, entre deux points espacés dans la direction de l'écoulement du fluide, selon un mode de réalisation de l'invention.

Les étapes du procédé sont repérées sur la figure 1 par des lettres de a à i. Lorsqu'un gaz s'écoule dans une conduite entre deux transducteurs ultrasonores espacés dans la direction de cet écoulement d'une distance L le débit de gaz dans cette conduite s'écrit :

$$Q=(SL/4\pi Fac)\ (2\pi[Fac(T2-T1)] + (\varphi 2-\varphi 1))/T1T2$$

où S désigne la section moyenne de passage offerte à l'écoulement entre les deux points, T1 et T2 représentent respectivement les temps de propagation d'un signal acoustique émis dans le sens aval et dans le sens amont de l'écoulement du gaz, $\varphi 2$ et $\varphi 1$ représentent respectivement les déphasages acoustiques induits dans chacun des signaux acoustiques en raison de la propagation de ces signaux et Fac représente la fréquence de ces signaux acoustiques.

Cette expression du débit correspond au rapport d'un premier terme

$$2\pi[Fac(T2-T1)] + (\varphi 2-\varphi 1),$$

où [x] désigne la partie entière de x,
sur un second terme T1T2 qui est égal au produit des temps de propagation.

Le premier terme est égal à la somme, d'une part, de $2\pi[Fac(T2-T1)]$ qui détermine le nombre de périodes entières existant dans la différence des temps de propagation T2-T1 , constituant une mesure approximative du temps de propagation et, d'autre part de $(\varphi 2-\varphi 1)$ qui détermine la différence des déphasages acoustiques induits dans chaque signal.

Étant donné que T1 = Uc-v et T2 = L/c+v, où c et v représentent respectivement la vitesse de propagation du signal acoustique et la vitesse du gaz, et comme la vitesse de propagation dépend principalement de la température qui varie peu lors des mesures de débit, le terme T1T2 varie peu pour une composition de gaz donnée et, par conséquent, ce terme est recalculé avec une fréquence plus faible que pour le premier terme.

Cependant, lorsque ce second terme est calculé, on effectue une mesure des temps de propagation T1 et T2 par une méthode différente de celle utilisée pour les temps de propagation figurant dans le premier terme.

En effet, dans le premier terme, seule intervient la différence des temps de propagation, c'est-à-dire qu'une mesure relative (à une constante près) de ces temps est suffisante. De plus, la précision requise dans ce cas est faible (de l'ordre quelques microsecondes) puisque l'on s'intéresse à la partie entière de Fac(T2-T1).

Par contre, dans le second terme, il s'agit de la mesure absolue des temps de propagation et, par conséquent, la précision obtenue pour cette mesure est directement reportée sur la précision de mesure du débit (il faut donc éviter d'avoir un décalage sur la mesure).

Par exemple, si la précision recherchée sur le débit est de 1 %, la précision sur la mesure des temps de propagation doit être voisine de 0, 5 %, ce qui correspond à une erreur inférieure à 2 µs sur les temps de propagation avec les gaz et les longueurs L entre deux transducteurs usuels (ex : 150 mm pour le méthane).

Ainsi, l'expression du débit de gaz peut par exemple s'écrire

$$Q = (SL/4\pi Fac)\ (2\pi[Fac(T2env-T1env)]+(\varphi 2-\varphi 1))/(T1pz-T0)(T2pz-T0)$$

dans laquelle les temps de propagation T1env et T2env sont mesurés par la méthode dite de l'enveloppe et les temps de propagation T1pz et T2pz sont mesurés par la méthode dite de passage à zéro, T0 désignant la constante à retrancher pour obtenir le temps de propagation dans le gaz. Ces deux méthodes sont explicitées plus loin.

Il est avantageux d'utiliser ces deux méthodes différentes pour mesurer les temps de propagation plutôt que d'effectuer toutes les mesures par la seule méthode de passage à zéro étant donné que cette dernière consomme d'avantage d'énergie que la méthode dite de l'enveloppe.

En revenant à la figure 1, l'étape a décrit une étape au cours de laquelle on émet dans le sens aval, du premier transducteur vers le second, un signal ultrasonore et l'on détermine par la méthode dite de passage à zéro le temps de propagation (T1pz-T0) de ce signal ultrasonore.

De même, on émet dans le sens amont, c'est à dire à contre courant un signal ultrasonore du second transducteur vers le premier et l'on détermine le temps de propagation (T2pz-T0) de ce signal par la même méthode que précédemment.

A l'étape b, on calcule à partir des valeurs (T1pz-T0) et (T2pz-T0) ainsi calculées, le coefficient qui va être considéré comme constant pendant un certain nombre de "tirs" (émissions de signaux ultrasonores),

$$KT = K/(T1pz-T0)(T2pz-T0)$$

où

$$K = SL/4\pi Fac.$$

Lors des derniers tirs, un volume de gaz V(n-2) a été comptabilisé et le débit Q(n-2) a été mesuré. Si l'on suppose que le débit n'a pas varié depuis les derniers tirs, alors Q(n-1)=Q(n-2) et l'on incrémente le volume V(n-2) du volume Q(n-1)$\Delta$t où $\Delta$t représente le temps écoulé entre deux tirs consécutifs dans le même sens, ce qui fournit le volume incrémenté V(n-1) = V(n-2) + Q(n-1)$\Delta$t.

Un paramètre n$\varphi$ qui représente le nombre de mesures de déphasage effectuées depuis la dernière mesure des temps de propagation (T1pz-T0) et (T2pz-T0) est ensuite initialisé à zéro.

L'étape c consiste à attendre le temps $\Delta$t jusqu'à la prochaine étape.

Lors de l'étape suivante d, on émet dans le sens aval, du premier transducteur vers le second, un signal ultrasonore et l'on détermine par la méthode dite de l'enveloppe, le temps de propagation T1env de ce signal, puis on mesure le déphasage ultrasonore $\varphi 1$ qui a été induit dans ledit signal en raison de sa propagation dans l'écoulement de gaz entre les deux transducteurs.

Le principe de la mesure de déphasage sera décrit en détail plus loin.

De même, on émet dans le sens amont, du second transducteur vers le premier, un signal ultrasonore et l'on détermine le temps de propagation T2env de ce signal, puis on mesure le déphasage ultrasonore correspondant $\varphi 2$ induit dans ledit signal.

Lorsque cette étape est réalisée, on procède dans l'étape e à un test pour savoir si le paramètre n$\varphi$ est égal à zéro. Si, comme cela vient d'être décrit à l'étape b, n$\varphi$ = 0, c'est à dire s'il s'agit des premières mesures de déphasages effectuées depuis les dernières mesures de temps de propagation (T1pz-T0) et (T2pz-T0), alors on fixe un paramètre Tref = (T1env+T2env)/2 qui représente la moyenne des temps de propagation correspondant respectivement aux tirs amont et aval (étape f).

Par contre, si nφ≠0, on passe à l'étape suivante g au cours de laquelle le premier terme 2π[Fac(T2env-T1env)] +(φ2-φ1) est déterminé à partir des mesures précédentes de T1env, φ1, T2env, φ2.

On calcule ensuite le débit de gaz Q(n), comme étant égal au produit du premier terme qui vient d'être déterminé par le terme KTdéterminé à l'étape b. Le volume de gaz comptabilisé jusqu'à présent, V(n-1), est alors incrémenté du volume Q(n)Δt, soit V(n) = V(n-1) + Q(n)Δt.

On fixe un paramètre Tenv = (T1env+T2env)/2qui représente la moyenne effectuée sur les derniers temps de propagation mesurés respectivement suivant les tirs amont et aval et l'on incrémente le paramètre nφ.

L'étape h consiste à attendre le temps Δt avant la prochaine étape.

Lors de l'étape i, on procède à un test sur chacun des deux paramètres nφ et Tref pour savoir si, d'une part, nφ atteint un nombre de mesures de déphasages maximal prédéterminé nφmax et , d'autre part, | Tenv-Tref | dépasse un seuil prédéterminé ΔTmax.

La deuxième condition a été établie afin de vérifier si le milieu de propagation subit une modification brutale, par exemple de la nature du gaz ou de la température.

Si aucune de ces deux conditions n'est satisfaite, cela signifie que le seuil nφmax n'a pas été atteint et que le milieu de propagation n'a pas varié brutalement. Dans ce cas, les étapes d à i sont de nouveau effectuées. Par contre, si au moins l'une des deux conditions est remplie, alors, on effectue de nouveau les étapes de a à i.

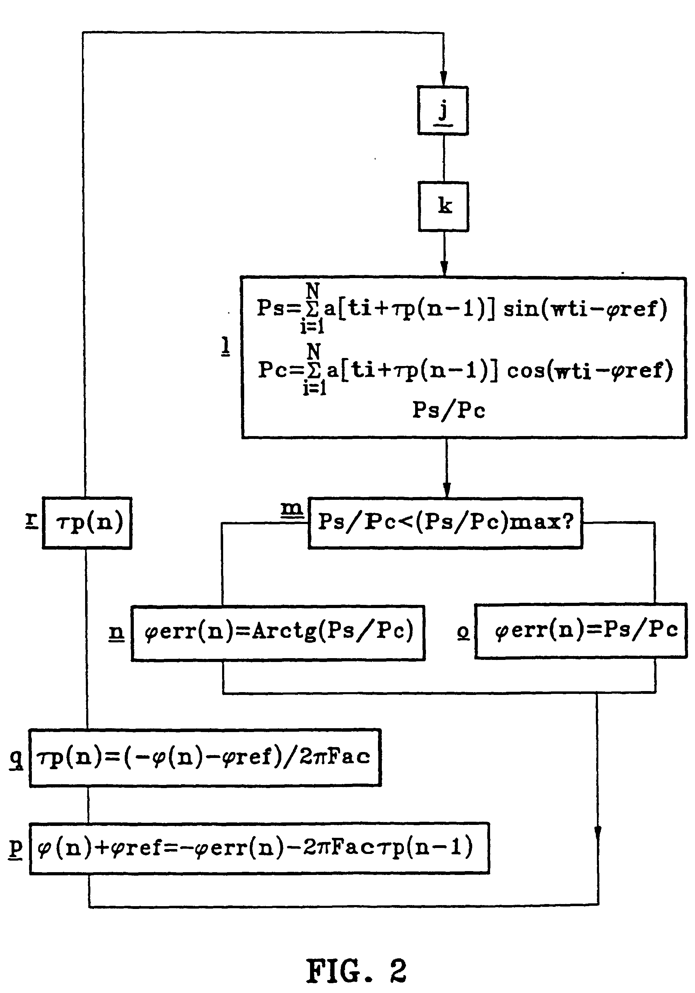

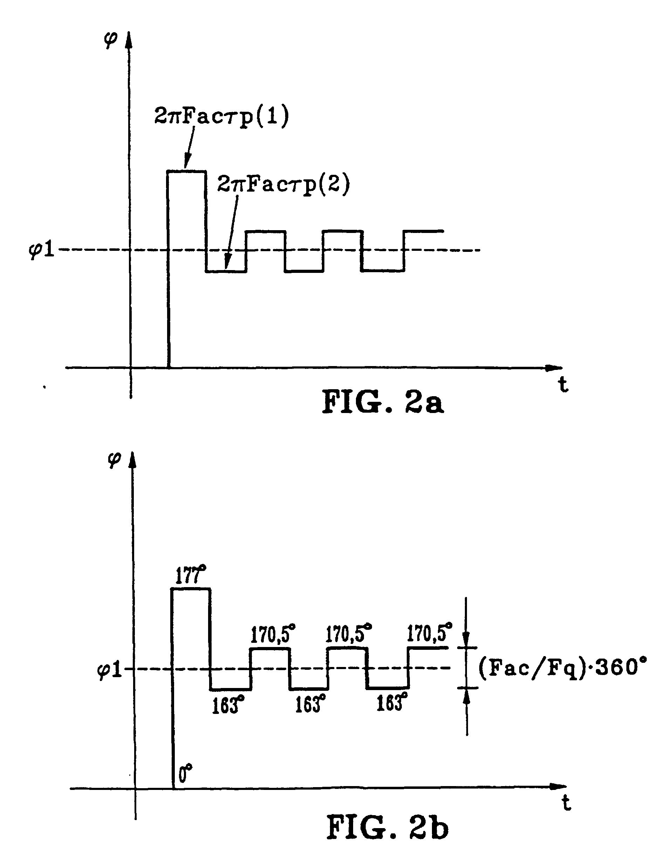

Le principe de la mesure du déphasage va maintenant être décrit en référence à la figure 2 représentant les différentes étapes du procédé de mesure selon l'invention qui sont incluses dans l'étape d de la figure 1.

Pour mesurer le déphasage ultrasonore induit dans un signal ultrasonore du fait de sa propagation dans l'écoulement de gaz entre les deux transducteurs, on procède par itérations successives, la figure 2 représentant l'une de ces itérations qui a lieu pour chaque "tir" ultrasonore effectué dans un même sens de propagation. Les itérations successives sont effectuées parallèlement pour les deux sens de propagation mais de manière indépendante pour chaque sens.

Pour l'itération d'ordre 1, lorsqu'un tir ultrasonore vient d'être effectué à partir de l'un des transducteurs, par exemple vers l'aval (étape j), le signal ultrasonore affecté du déphasage ultrasonore correspondant à mesurer, est reçu par l'autre transducteur.

Durant l'étape d'acquisition k, ce signal est échantillonné à une fréquence dite d'échantillonnage et numérisé, par exemple simultanément.

Au cours de l'étape l qui correspond à la première étape de l'opération de détection synchrone, le signal échantillonné et numérisé est multiplié par des signaux de référence ayant la forme respective d'un sinus $\sin(wt_i-\varphi ref)$ et d'un cosinus $\cos(wt_i-\varphi ref)$ dits de référence qui possèdent une même phase dite de référence φref.

Pour N points échantillonnés, on effectue lors de la détection synchrone les calculs suivants :

$$ps = \Sigma\ a(ti)\ x\ \sin(wt_i-\varphi ref)$$

$$pc = \Sigma\ a(ti)\ x\ \cos(wt_i-\varphi ref)$$

où a(ti) : représente la valeur obtenue au point i du signal échantillonné.

Après avoir calculé les termes ps et pc, lors de l'étape l, et effectué leur rapport, on effectue un test sur la valeur obtenue pour ce rapport afin de vérifier si ps/pc est inférieur ou non à un seuil prédéterminé, (ps/pc)max, qui est choisi en fonction de la précision que l'on souhaite obtenir sur la mesure du débit (étape m).

Si ps/pc ≥ (ps/pc)max, cela signifie que le calcul de l'Arctangente du rapport ps/pc, φerr(1), qui est égal à ($\varphi_1$(1)-φref), où $\varphi_1$(1) représente la phase ultrasonore du signal échantillonné, ne peut être approximé à ps/pc (Arctgx = x). Il est alors nécessaire de calculer l'Arctangente (étape n) pour obtenir la valeur de la différence de phase entre la phase du signal échantillonné et la phase de référence : φerr(1) = Arctg(ps/pc).

Par contre, si ps/pc < (ps/pc)max, on peut effectuer l'approximation Arctg x = x et, la valeur de la différence de phase entre la phase du signal échantillonné et la phase de référence est alors donnée par l'expression φerr(1) = ps/pc (étape o).

Dans un tel cas, cela signifie que la différence de phase entre la phase du signal échantillonné et la phase de référence approxime zéro avec la précision souhaitée qui est définie par le seuil (ps/pc)max.

Il convient de noter que, lorsque les étapes de la figure 2 correspondent à la première itération, il est probable que la détermination de φerr amène à calculer l'Arctangente du rapport ps/pc.

Lors de la première itération, l'étape p se résume à écrire

$$\varphi_1(1)+\varphi ref = -\varphi err(1)$$

L'étape suivante q définit un déphasage programmable se traduisant sous la forme d'un retard $\tau p(1)$ qui est asservi à la valeur du déphasage ultrasonore obtenu précédemment par détection synchrone

$$\tau p(1) = \varphi err(1)/2\pi Fac.$$

Conformément à l'étape r, on introduit ensuite le retard programmable $\tau p(1)$ entre l'étape d'émission et l'étape de détection synchrone en vue d'affecter de ce retard le prochain signal ultrasonore qui va être émis dans le même sens de propagation.

Pour l'itération d'ordre n, on émet un signal ultrasonore dans le même sens de propagation que le signal émis lors de l'itération d'ordre n-1 (étape j) puis, le signal ultrasonore est échantillonné et numérisé (étape k) avant de subir une détection synchrone (étapes l à o).

Lors de l'étape l, on effectue les opérations suivantes (détection synchrone) :

$$ps = \Sigma\, a[ti+\tau p(n-1)] \times \sin\,(wt_i-\varphi ref)$$

$$pc = \Sigma\, a[ti+\tau p(n-1)] \times \cos\,(wt_i-\varphi ref)$$

où $\tau p(n-1)$ représente le retard programmable calculé à l'itération précédente d'ordre n-1 et qui a été appliqué au signal traité dans l'itération en cours d'ordre n, entre l'étape d'émission de ce signal et l'étape de détection synchrone.

Conformément aux étapes l et m, et comme expliqué précédemment, on calcule le rapport ps/pc et l'on procède au test de comparaison de la valeur de ce rapport avec le seuil (ps/pc)max.

Selon le cas (étape o ou n), on calcule, par approximation (Arctgx = x) ou par le calcul de l'Arctangente, $\varphi err$ (n) qui est égal à la différence de phase entre la phase du signal échantillonné lors de l'itération d'ordre n et la phase du signal de référence.

La valeur du déphasage ultrasonore obtenue par détection synchrone lors de l'itération d'ordre n, $\varphi_1(n)-\varphi ref$, est déterminée lors de l'étape p par la somme, d'une part, de la différence de phase $\varphi err(n)$ entre la phase du signal échantillonné lors de l'itération d'ordre n, et la phase du signal de référence et, d'autre part, du déphasage programmable de l'itération d'ordre n-1, $2\pi\, Fac\tau p(n-1)$ soit :

$$\varphi_1(n)+\varphi ref = -\varphi err(n) - 2\pi Fac\tau p(n-1)$$

En fonction de la valeur du déphasage ultrasonore obtenue, on définit un nouveau retard programmable $\tau p$ (n) asservi à cette valeur :

$$\tau p(n) = (-\varphi_1(n)-\varphi ref) / 2\pi Fac\ (\text{étape q})$$

et l'on applique ce retard au prochain signal ultrasonore entre l'étape d'émission et l'étape de détection synchrone (étape r) afin que l'étape de détection synchrone de l'itération d'ordre n+1 détermine une différence de phase $\varphi err$ (n+1) entre la phase du signal échantillonné lors de l'itération d'ordre n+1 et la phase de référence qui soit aussi proche de zéro que possible.

Lorsque $\varphi err(n+1)$ est aussi proche de zéro que possible, il est possible d'effectuer l'approximation Arctgx = x et l'on a $\varphi err(n+1) = ps/pc$.

Cela signifie que la valeur du déphasage ultrasonore $\varphi 1(n+1)+\varphi ref$ est sensiblement égale au déphasage programmable $2\pi Fac\tau p(n)$ appliqué lors de l'itération d'ordre n au terme ps/pc près.

Le processus d'itérations successives utilisé pour la mesure des déphasages ultrasonores est illustré à la figure 2a qui traduit le déphasage en fonction du temps et montre ainsi qu'en deux itérations successives il est possible de satisfaire à la condition exprimée lors de l'étape m de la figure 2, c'est à dire de remplacer l'étape n par l'étape o, supprimant ainsi le calcul de l'Arctangente du rapport ps/pc.

La figure 2b fournit les valeurs numériques de déphasage ultrasonore de l'exemple représenté à la figure 2a et $(Fac/Fq)360°$ représente la résolution due à l'échantillonnage.

Dans cet exemple, la résolution est de 3,75° étant donné que Fac = 40 kHz et

Fq = 3, 84 MHz.

Ce procédé est donc avantageux puisqu'il permet de réduire le temps et le volume de calcul et, par là même, de limiter la consommation énergétique.

Ceci est particulièrement intéressant lorsque la mesure du débit de fluide est mise en oeuvre sur un compteur équipé de piles étant donné que la durée de vie des piles est ainsi augmentée.

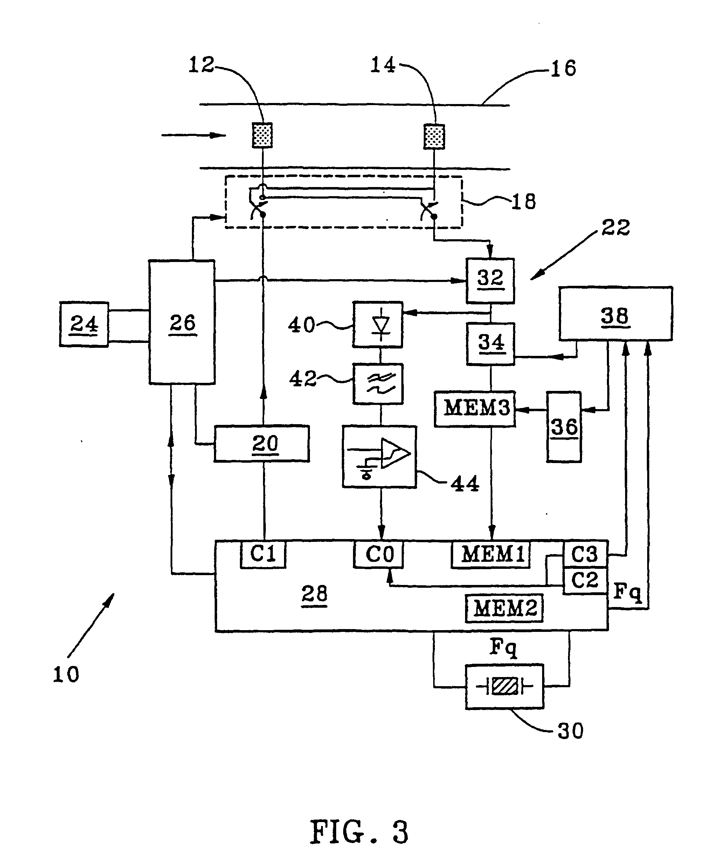

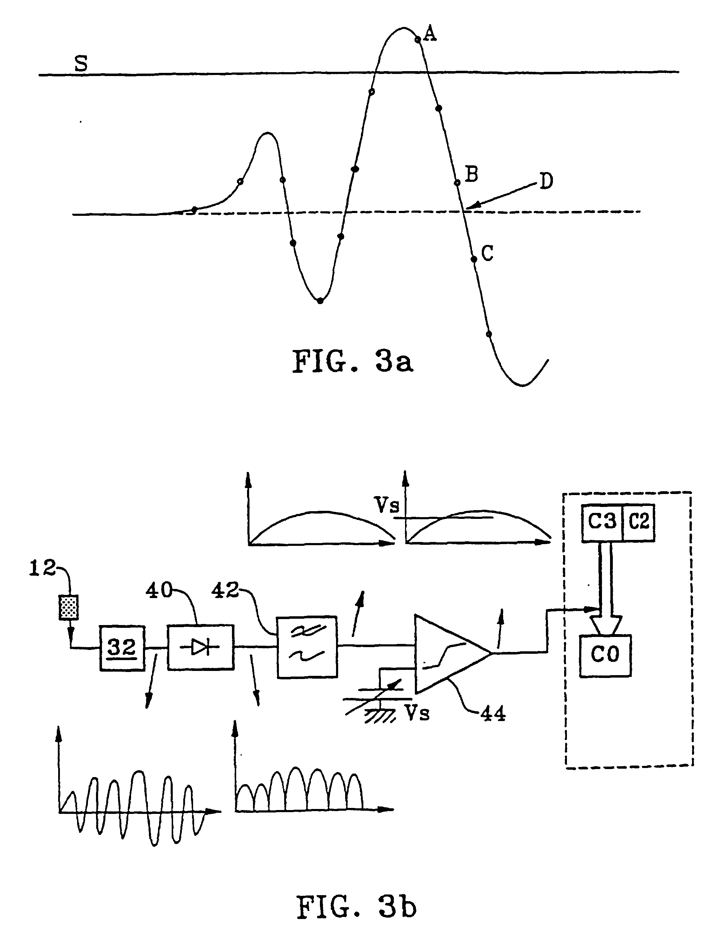

Un exemple de circuit électronique 10 utilisé pour la mise en oeuvre du procédé selon l'invention est représenté schématiquement à la figure 3. Sur cette figure, le circuit électronique 10 a pour fonction, d'une part, d'alimenter électriquement les différents blocs fonctionnels qui seront décrits ci-après et d'autre part, de commander le procédé de mesure du débit de gaz selon l'invention.

Comme représenté sur cette figure, deux transducteurs ultrasonores 12, 14 fonctionnant à une fréquence de 40kHz sont disposés face à face dans une conduite 16 dans laquelle s'écoule un gaz.

Ces deux transducteurs sont reliés à un bloc de commutation 18 qui permet l'utilisation de chaque transducteur alternativement comme émetteur et récepteur.

A ce bloc de commutation 18 sont reliés deux blocs, l'un 20 dit d'émission et l'autre 22 dit de réception. Le bloc d'émission 20 comprend un amplificateur opérationnel et un convertisseur numérique/analogique.

Le circuit 10 comprend une source d'énergie électrique 24 et un bloc 26 de gestion de l'alimentation électrique relié notamment aux blocs de commutation, d'émission, de réception et à un microcontroleur 28, qui comprend notamment une horloge à quartz 30 dont la fréquence Fq est par exemple, de 3, 84 MHz, une unité arithmétique et logique, un séquenceur, une mémoire vive MEM1 de type RAM (Random Access Memory), une mémoire morte MEM2 de type ROM (Read Only Memory) et plusieurs compteurs C1 à C3.

Les différentes instructions correspondant aux étapes du procédé selon l'invention représentées sur les figures 1 et 2 sont contenues dans la mémoire MEM2.

Le bloc de réception 22 comprend un amplificateur 32 relié au bloc de commutation 18 et amplifiant le signal électrique correspondant au signal ultrasonore reçu, un convertisseur analogique/numérique 34 qui numérise et échantillonne simultanément ledit signal, une mémoire vive MEM 3 de type RAM qui stocke les valeurs échantillonnées, un compteur 8 bits préchargé 36 qui génère les adresses d'écriture dans la mémoire MEM3 avec une fréquence constante déterminée par un diviseur de la fréquence d'horloge qui est contenu dans un bloc de synchronisation 38 relié au microcontroleur 28. Ce bloc 38 permet de synchroniser l'étape d'échantillonnage du signal reçu.

Le bloc de réception 22 comprend également, relié à la sortie de l'amplificateur 32, un circuit redresseur double alternance 40 constitué par exemple par un pont de diodes, un filtre passe-bas 42 relié au circuit redresseur, un comparateur à seuil 44 relié audit filtre et à un registre 16bits Co du microcontroleur.

Un registre C2 faisant partie du microcontroleur est préchargé en vue de démarrer l'acquisition des points d'échantillonnage. Un compteur 16 bits C3 contrôle le bloc de synchronisation 38.

Ce compteur C3 compte le temps écoulé depuis le début de l'émission d'un signal ultrasonore par l'un des transducteurs 12,14. Le contenu du registre C2 est comparé à la valeur obtenue par le compteur C3 lors de chaque front montant du signal d'horloge.

Lorsque le contenu du compteur C3 atteint la valeur contenue dans le registre C2, le bloc de synchronisation 32 génère un signal à la fréquence d'échantillonnage Fe destiné au convertisseur 34.

Comme cela a été expliqué précédemment en référence à la figure 2, un déphasage programmable est affecté à chaque signal ultrasonore émis entre les deux transducteurs ultrasonores. Ce déphasage qui se traduit sous la forme d'un retard peut être appliqué au signal, au choix entre l'étape d'émission du signal et l'étape de détection synchrone, ce qui rend très souple l'utilisation de ce procédé.

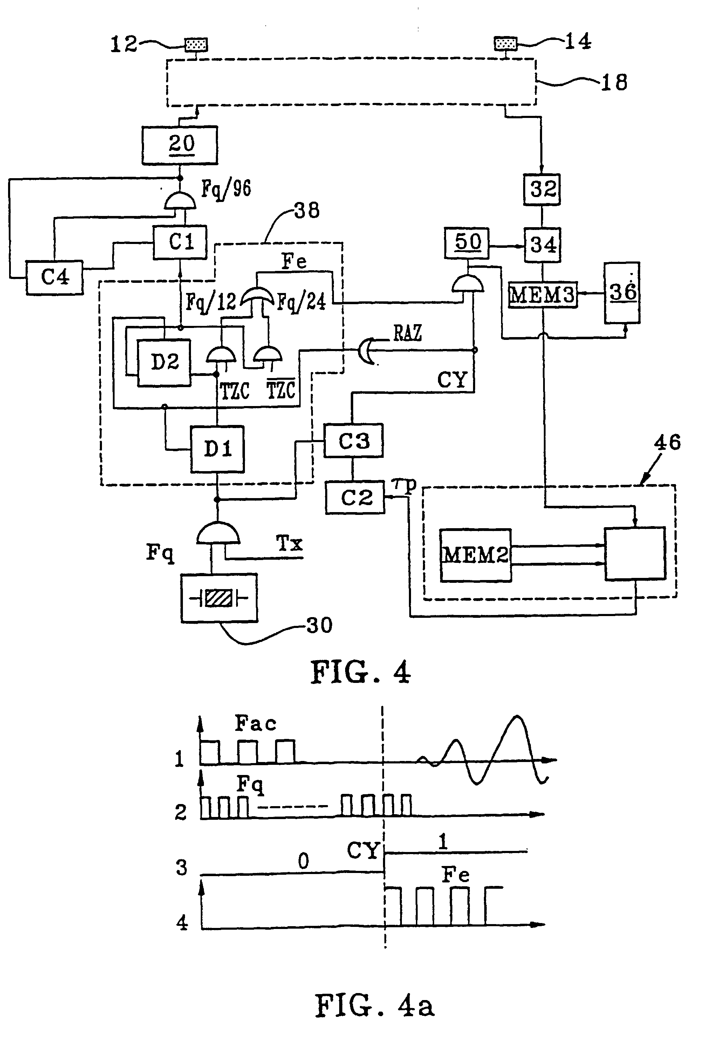

Ainsi, il est possible d'introduire un retard programmable dans le signal reçu au moment de son échantillonnage. La figure 4 illustre cette possibilité.

Le retard programmable peut également être appliqué dans les signaux de référence sinus et cosinus utilisés lors de la détection synchrone. Cette variante n'est pas décrite sur les figures.

On peut aussi décomposer le retard programmable en deux sous retards qui sont introduits dans le signal chacun lors d'une étape distincte du procédé, entre l'étape d'émission dudit signal et l'étape de détection synchrone.

Afin de déterminer le sous retard programmable qui doit être appliqué lors d'une étape précise du procédé, on effectue la division euclidienne du retard programmable modulo la résolution du déphaseur programmable qui est utilisé dans ladite étape du procédé.

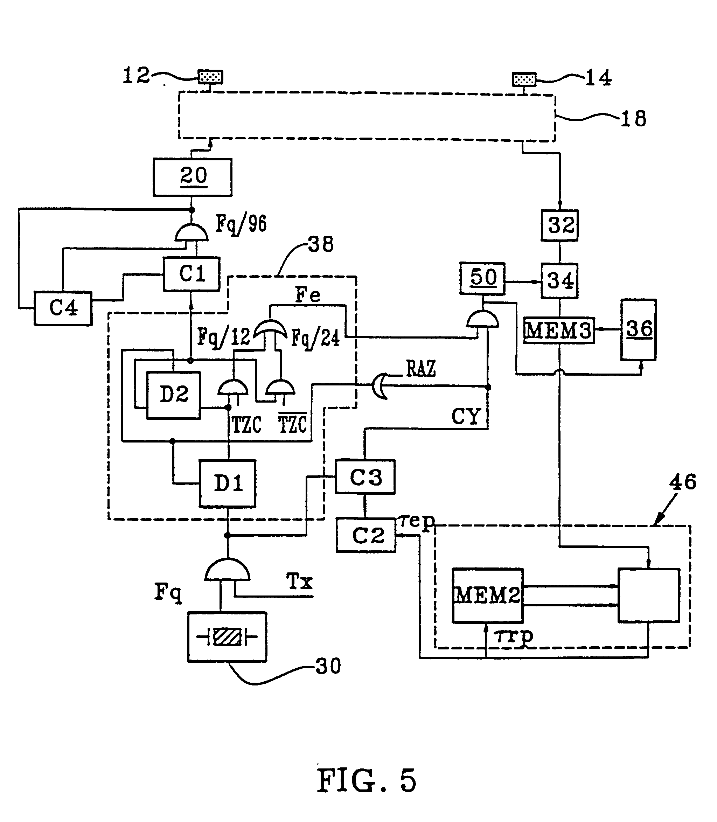

Ainsi, comme l'illustre la figure 5, le retard programmable est décomposé en deux sous retards qui sont introduits, l'un, lors de l'étape d'échantillonnage, dans le signal dit d'échantillonnage et l'autre, lors de l'étape de détection synchrone, dans les sinus et cosinus de référence.

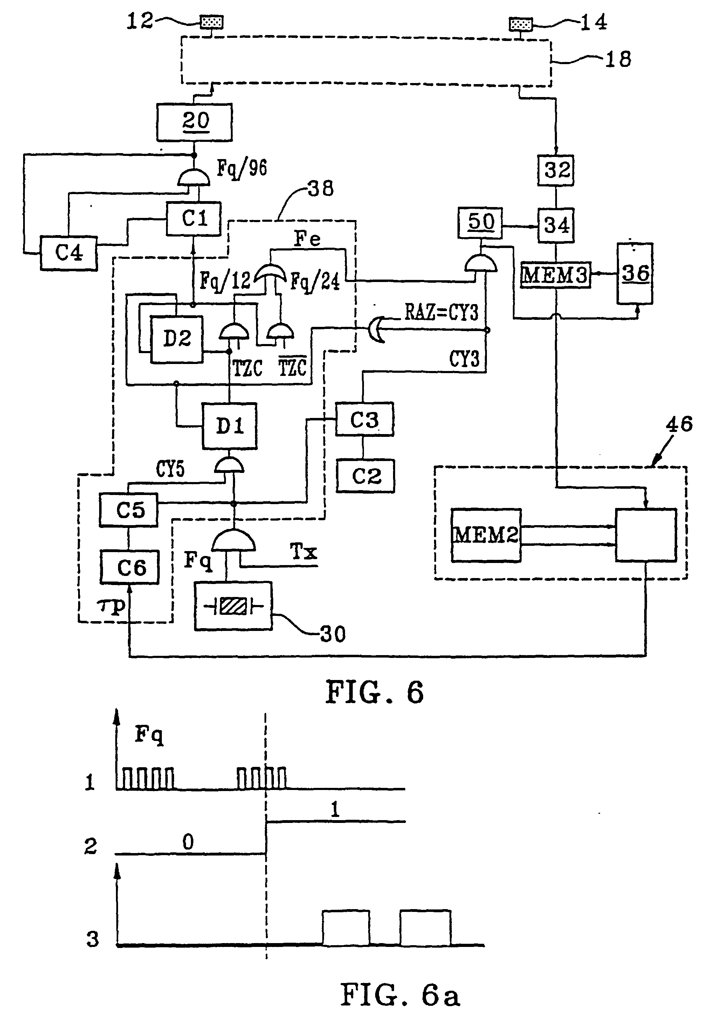

Comme illustré sur la figure 6, le retard programmable peut aussi être introduit lors de l'étape d'émission dans le signal dit d'émission.

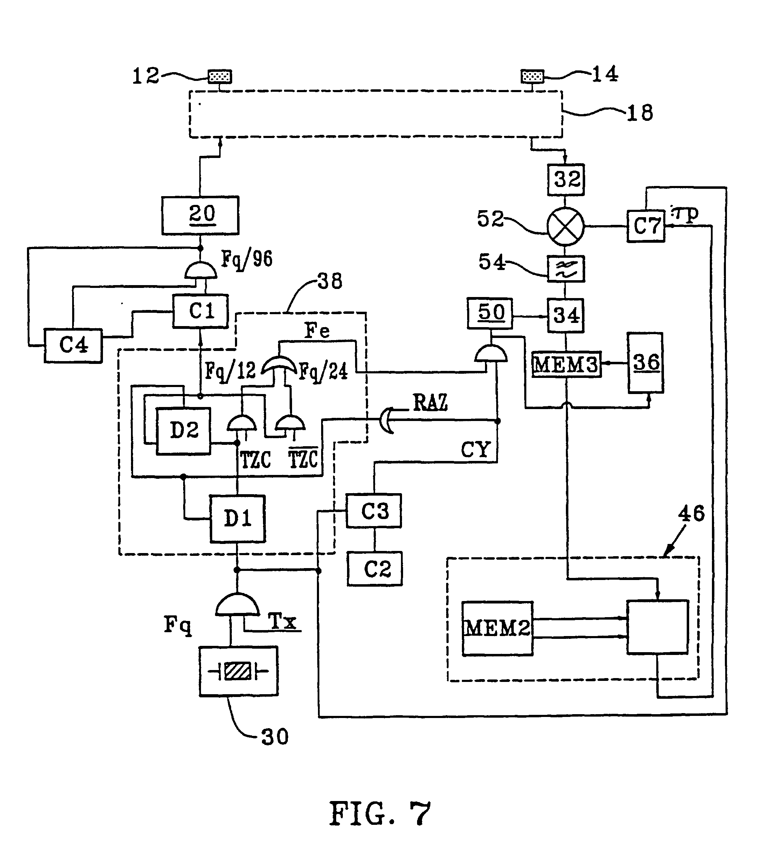

La figure 7 illustre encore une autre possibilité selon laquelle on effectue une opération d'hétérodynage sur le signal reçu. Ainsi, le signal reçu est mélangé avec un signal dit de mélange auquel est affecté le retard programmable afin d'obtenir un signal dit mélangé dont la fréquence est réduite par rapport à la fréquence du signal reçu.

En décomposant le retard programmable en deux, voire plus de deux sous-retards programmables, il est possible

EP 0 852 725 B1

d'effectuer de nombreuses combinaisons entre les différentes étapes dans lesquelles on introduit les sous-retards programmables : échantillonnage, détection synchrone, émission, hétérodynage.

On va maintenant décrire en référence aux figures 1, 2, 3, 3a, 3b, 4, et 4a un mode de réalisation du procédé de mesure du débit de gaz selon l'invention.

Ainsi que représenté sur la figure 1, après émission de deux signaux ultrasonores en sens opposés l'un de l'autre, on procède selon l'étape a à une mesure des temps de propagation respectifs (T1pz-T0) et (T2pz-To) de chacun de ces signaux par la méthode dite de passage à zéro.

Les instructions qui permettent d'effectuer ces mesures sont contenues dans la mémoire morte MEM2 du microcontroleur 28.

La figure 3a illustre la méthode de mesure par passage à zéro effectuée sur chaque signal ultrasonore reçu. Le signal reçu est amplifié par l'amplificateur 32 de la figure 3 puis converti en numérique et échantillonné simultanément dans le convertisseur 34. L'échantillonnage est effectué à une fréquence Fe par exemple égale à 8 Fac soit 320kHz.

Les instructions contenues dans la mémoire MEM2 permettent de comparer les valeurs de l'amplitude du signal reçu aux points échantillonnés et qui sont mémorisées dans la mémoire vive MEM3 à une valeur prédéterminée correspondant à un seuil S, et l'on recherche parmi les valeurs d'amplitude des points échantillonnés le premier point suivant, A, qui a une valeur d'amplitude supérieure au seuil.

A partir de ce point, on recherche le prochain passage par zéro de la courbe représentative du signal ultrasonore. Pour ce faire, on détermine deux points échantillonnés consécutifs B et C qui encadrent le point où l'amplitude de la courbe passe par la valeur zéro et l'on procède de manière connue par interpolation linéaire entre B et C pour déterminer le point D et donc mesurer le temps de passage à zéro (Tpz-T0).

Il est également possible de rechercher le dernier passage à zéro de la courbe représentative du signal ultrasonore avant que ladite courbe ne passe par le seuil. On mesure selon cette méthode (T1pz-T0) et (T2pz-To) (étape a), qui sont mémorisées dans la mémoire MEM1 du microcontroleur puis les étapes b et c de la figure 1 sont effectuées comme expliqué précédemment.

Lors de l'étape b, les calculs sont effectués par l'unité arithmétique et logique du microcontroleur 28 et les valeurs KT, du volume de gaz incrémenté et du paramètre nφ sont stockées dans la mémoire MEM1.

Au cours de l'étape d, on effectue deux tirs consécutifs en sens opposés l'un de l'autre et sur chaque signal ultrasonore émis dans un sens on mesure le temps de propagation dudit signal par la méthode dite de l'enveloppe Tenv ainsi que le déphasage ultrasonore correspondant φ.

La figure 3b illustre la méthode de mesure dite de l'enveloppe.

Comme représenté sur la figure 3b, lorsqu'un signal ultrasonore est reçu par l'un des transducteurs, par exemple le transducteur 12, ledit signal est converti en signal électrique qui est amplifié dans l'amplificateur 32, rectifié dans le circuit redresseur 40 et filtré dans le filtre passe-bas 42 afin de former l'enveloppe du signal reçu.

A chaque opération effectuée sur le signal électrique de réception correspond un schéma donnant l'allure du signal après l'opération concernée.

Le comparateur à seuil 44 est utilisé pour comparer le passage de la courbe représentant l'enveloppe du signal reçu par un seuil prédéterminé qui correspond à une tension dite de seuil réglable Vs.

Le signal de sortie du comparateur 44 est relié à l'entrée "Load" (chargement) du registre 16 bits Co. Le registre Co capture le contenu du compteur C3 lorsque la sortie du comparateur 44 change d'état. Ainsi, le registre Co contient l'instant où l'enveloppe de l'écho ultrasonore traverse le seuil de tension Vs. Cette valeur permet alors de déterminer le temps de propagation T1env ou T2env qui figure dans la formule exprimant le débit de gaz car le compteur C3 est initialisé à zéro au début d'une émission ultrasonore.

Le déphasage ultrasonore induit par la propagation de ce signal ultrasonore est déterminé conformément aux étapes de la figure 2, en référence aux figures 4 et 4a et l'on sa place dans le cadre de l'itération d'ordre n du procédé selon l'invention.

Ainsi que représenté à la figure 4a, un signal d'émission est généré à partir du microcontroleur en divisant la fréquence Fq de l'horloge pour obtenir un signal de fréquence Fac = 40kHz excitant l'un des transducteurs. L'autre transducteur reçoit un signal qui a l'allure retenue sur la partie droite du schéma 1 de la figure 4a.

En référence à la figure 4, lorsque le signal Tx provenant de l'unité arithmétique et logique du microcontroleur 28 passe à 1, le signal d'horloge de fréquence Fq est libéré par la porte logique "ET" et vient alimenter, d'une part, le compteur C3 et, d'autre part, le compteur C1 par l'intermédiaire du bloc de synchronisation 38 délimité par des traits en pointillé.

Le signal d'horloge qui alimente C1 est d'abord envoyé vers un compteur diviseur de fréquence par 12 D1 qui est en fait constitué de quatre bascules du type FF (Flip-Flop) divisant successivement par 3, 2 et 2 la fréquence Fq de l'horloge.

La sortie du compteur D1 alimente "l'aiguillage" formé de plusieurs portes logiques "ET" et "OU" ainsi qu'un compteur diviseur de fréquence par 2, D2 qui est constitué d'une bascule FF.

Le signal de sortie issu de D2 est ensuite envoyé vers le compteur diviseur de fréquence par 4, C1 permettant ainsi d'obtenir un signal de fréquence Fq/96 en sortie dudit compteur C1 et qui alimente l'une des entrées d'une porte "ET". Un compteur 4 bits, C4 externe au microcontroleur 28 est relié à l'autre entrée de cette porte logique ainsi qu'au compteur C1. Ce compteur C4 est préchargé à une valeur fixe qui correspond au nombre de périodes du signal d'excitation souhaité par exemple 8 périodes, et la porte logique "ET" laisse passer le signal d'excitation de fréquence Fq/96 (=40 kHz) tant que le compteur C4 n'a pas achevé son décomptage.

Lorsque le compteur C4 revient à zéro, le signal d'excitation est alors bloqué.

Lorsque le signal Tx est à 1, le compteur C3 est alimenté.

Le registre C2 est préchargé à une valeur prédéterminée correspondant à une estimation du temps de propagation d'un signal ultrasonore entre les deux transducteurs. Le compteur C3 compte à la fréquence de l'horloge Fq dès lors qu'il est alimenté et jusqu'à atteindre la valeur prédéterminée du registre (schéma 2 de la figure 4a). Un décodeur non représenté compare en permanence la valeur atteinte par le compteur C3 à la valeur contenue dans le registre C2. Cette valeur du registre C2 est en fait un retard programmable $\tau p(n-1)$ qui est déterminé lors de l'itération précédente d'ordre n-1 du procédé et qui est appliqué au signal d'échantillonnage (Fig 4).

Simultanément au comptage par le compteur C3, l'un des transducteurs est excité par un signal d'excitation de fréquence Fq/96 et génère un signal ultrasonore qui se propage dans le gaz et atteint l'autre transducteur en étant affecté d'un déphasage ultrasonore $\varphi$.

A ce moment, le compteur C3 a atteint la valeur programmée $\tau p(n-1)$ du registre C2 et le signal CY passe à 1, les blocs diviseurs D1, D2 sont remis à zéro et le signal d'échantillonnage de fréquence Fe est libéré.

Ce signal a une fréquence égale à Fq/24 lorsque le signal Tzc provenant du microcontroleur 28 est à 0.

Par contre, lorsque l'on effectue une mesure des temps de propagation par la méthode dite de passage à zéro, le signal Tzc est à 1 et le signal en sortie de la porte "OU" a une fréquence égale à Fq/12.

Le signal de fréquence Fe issu du bloc de synchronisation 38 est envoyé sur une entrée d'une porte logique "ET", l'autre entrée de cette porte recevant le signal CY provenant du compteur C3. Lorsque le signal CY passe à 1, le signal de fréquence Fe alimente le compteur 36 et un inverseur logique 50, qui, lui-même, alimente le convertisseur 34.

Sur le front montant du signal d'échantillonnage, la conversion du signal électrique correspondant au signal ultrasonore reçu et ayant été traité par le bloc 32 est effectuée et les valeurs du signal converti et échantillonné sont écrites dans la mémoire MEM3 à l'adresse contenue dans le compteur 36.

Sur le front descendant du signal d'échantillonnage, l'adresse d'écriture contenue dans le compteur 36 est incrémentée de 1.

Lorsque les adresses du compteur 36 sont toutes remplies, l'étape d'échantillonnage s'arrête par suite de la libération d'un signal qui fait passer le signal Tx à 0.

Il convient de noter que la détermination du temps de propagation Tenv est effectuée en même temps que la conversion et l'échantillonnage du signal reçu.

La fréquence d'échantillonnage est choisie égale à 4Fac pour réduire la consommation énergétique.

Les valeurs des signaux de référence sinus et cosinus stockées dans une mémoire morte MEM2 sont égales à -1, 0, +1, 0, -1, 0, +1,...en raison du choix de la fréquence d'échantillonnage Fe.

Ainsi, lors des calculs effectués à l'étape l, le calcul de ps et pc se ramène en fait à de simples additions, réduisant ainsi le volume de calcul et donc la consommation énergétique.

Dans le bloc de détection synchrone 46 représenté symboliquement sur la figure 4, on réalise également l'étape m de la figure 2 pour connaître la valeur du rapport ps/pc et la comparer à (ps/pc)max.

On calcule ensuite $\varphi err(n)$ qui représente la différence de phase entre la phase du signal échantillonné lors de l'itération d'ordre n et la phase du signal de référence (étapes n ou o de la figure 2). A partir de cette valeur, l'unité arithmétique et logique du microcontroleur calcule le retard programmable $\tau p(n)$ à écrire dans le registre C2 (étapes p, q, r) afin de le précharger à la valeur $\tau p(n)$ (durée du décomptage).

Ce retard n'est pas exactement égal au rapport $(-\varphi(n)- \varphi ref) / 2\pi Fac$ car il tient compte de la résolution du retard programmable.

Lors de la prochaine émission ultrasonore (itération d'ordre n+1) effectuée dans le même sens de propagation que celui correspondant à l'itération d'ordre n précédemment décrite, le retard programmable $\tau p(n)$ qui vient d'être déterminé sera écrit dans le registre C2 afin que l'étape de détection synchrone effectuée durant l'itération d'ordre n+1 détermine une différence de phase $\varphi err(n+1)$ entre la phase du signal échantillonné lors de cette itération et la phase de référence qui soit inférieure au seuil (ps/pc)max.

Lorsque cette condition est satisfaite, $\varphi err(n+1) =ps/pc$ et il n'est pas nécessaire de calculer l'Arctangente du rapport ps/pc.

Le déphasage ultrasonore est alors égal au déphasage programmable de l'itération d'ordre n, $2\pi Fac\tau p(n)$, au terme $\varphi err(n+1)$ près (ce terme est très petit étant donné l'approximation Arctgx= x).

La figure 5 représente une première variante de réalisation de l'invention. Au cours de cette variante, le déroulement des différentes étapes reste inchangé par rapport à ce qui a été décrit ci-dessus en référence aux figures 2, 4, et 4a, sauf pour ce qui est de l'étape de détection synchrone et de détermination du retard programmable à appliquer.

En effet, si l'on se place à l'itération d'ordre n, lorsque la différence de phase φerr(n) entre la phase du signal échantillonné lors de cette itération et la phase de référence vient d'être déterminée, soit par calcul de l'Arctangente (étape n), soit par approximation (étape o), le retard programmable τp(n) obtenu par calcul (étapes p et q) est alors décomposé en deux sous-retards programmables τep(n) et τrp(n).

Ces deux sous-retards sont appliqués respectivement au registre C2 pour l'échantillonnage et à la table des valeurs mémorisées +1, 0, -1, 0, +1... dans la mémoire morte MEM2 correspondant aux sinus et cosinus de référence.

Chacun de ces sous-retards est déterminé en effectuant la division euclidienne du retard programmable τp(n) modulo, d'une part, la fréquence d'échantillonnage et, d'autre part, la résolution du retard programmable.

Ainsi, le sous-retard programmable τep(n) affecté au registre C2 est égal à m(Fac/Fq) 360° / 2πFac, où (Fac/Fq) 360° représente la résolution du retard programmable.

De même, le sous-retard programmable τrp(n) affecté aux valeurs des sinus et cosinus de référence est égal à k(Fac/Fe) 360°, où (Fac/Fe) 360° représente la résolution due à l'échantillonnage.

Par exemple, si la valeur du déphasage ultrasonore obtenue à l'étape p (figure 2) du procédé est de 194°, il est possible de la décomposer de la manière suivante :

$$194° = m(Fac/Fq)360° + k(Fac/Fe)360°$$

En prenant Fe = 4Fac et Fac = Fq/96, on obtient :

$$194° = m \times 3,75° + k \times 90°$$

soit, en fait 194° = 3 x 3,75° + 2 x 90° + 2,75°, où le dernier terme, 2,75° est un résidu constituant une erreur d'accrochage de phase.

On pourra alors appliquer au registre C2 une estimation constante du temps de propagation acoustique auquel on ajoute le retard τep(n) = 3 x 3,75° / 2πFac, soit τep(n) = 3 / Fq, ce qui correspond à trois fronts d'horloge à la fréquence Fq, et aux valeurs des sinus et cosinus de référence le retard τrp(n) = 2 x 90° / 2πFac, soit τrp(n) = 2 / Fq, correspondant à deux fronts d'horloge d'échantillonnage.

Les figures 6 et 6a représentent une deuxième variante de réalisation de l'invention. En relation avec ces figures, seules les étapes du procédé permettant de déterminer le déphasage ultrasonore seront décrites.

Comme représenté sur les figures 6 et 6a pour l'itération d'ordre n du procédé, un signal dit d'émission qui est destiné à exciter un transducteur en vue de générer un signal ultrasonore d'émission est formé à partir du microcontroleur 28 par un compteur diviseur de fréquence C1 qui divise la fréquence Fq de l'horloge 30 par 96 pour obtenir un signal d'émission de fréquence Fac = 40kHz.

Ce signal d'émission est généré à partir d'un signal d'horloge de fréquence Fq qui est envoyé sur une entrée d'une première porte logique "ET", l'autre entrée recevant le signal Tx provenant de l'unité arithmétique et logique du microcontroleur 28.

La sortie de cette porte logique est reliée à une entrée d'une deuxième porte logique "ET" dont la sortie est reliée au bloc diviseur de fréquence D1 déjà décrit en référence à la figure 4.

La sortie de la première porte logique relie également, d'une part, un compteur C5 associé à un registre C6 et, d'autre part, le compteur C3 associé au registre C2.

Lorsque le signal Tx passe à 1, le compteur C5 est alimenté.

Le registre C6 est préchargé à une valeur prédéterminée correspondant au retard programmable τp(n-1) déterminé lors de l'itération précédente d'ordre n-1.

Dès que le compteur C5 est alimenté, il compte le nombre de fronts d'horloge (schéma 1 de la figure 6a) jusqu'à atteindre le nombre Fqτp(n-1), par exemple égal à 10.

Ce nombre de fronts d'horloge correspond à un déphasage égal à 10 x (Fac/Fq) x 2π, soit 37,5°.

En permanence, un décodeur compare la valeur atteinte par le compteur C5 et celle contenue dans le registre C6. Lorsque ce nombre est atteint, le signal CY5 passe à 1 (schéma 2 de la figure 6a) et le signal d'horloge de fréquence Fq est libéré.

De manière identique à ce qui a été décrit en référence à la figure 4, un signal d'émission de fréquence Fac = Fq/96, soit Fac = 40kHz est généré et excite l'un des transducteurs.

Après excitation de l'un des transducteurs, un signal ultrasonore est successivement émis de ce transducteur vers l'autre, reçu par ce dernier et converti en un signal électrique qui est amplifié avant d'être échantillonné et numérisé simultanément dans le convertisseur analogique numérique 34.

Simultanément au passage à 1 du signal Tx, le compteur C3 compte jusqu'à atteindre la valeur fixe contenue dans le registre C2. Cette valeur fixe est déterminée en fonction de l'estimée du temps de propagation du signal ultrasonore. Lorsque la valeur contenue dans le registre C2 est atteinte, le signal CY3 passe à 1, remet à zéro les blocs diviseurs D1 et D2 pour s'affranchir de l'incertitude de phase liée au retard programmable introduit dans l'étape d'émission et libère le signal d'échantillonnage de fréquence Fe comme cela a déjà été décrit en référence à la figure 4.

Le compteur 36, externe au microcontroleur 28 génère des adresses d'écriture dans la mémoire vive MEM3 pour y stocker les valeurs du signal échantillonné.

Toutes les étapes suivantes liées à la détection synchrone ont déjà été décrites en référence aux figures 2 et 4 et restent inchangées, mis à part le retard programmable qui est écrit dans le régistre C6 utilisé pour l'étape d'émission au lieu de l'étape d'échantillonnage.

La troisième variante illustrée par la figure 7 est intéressante si l'on souhaite diminuer le volume de calcul et donc la consommation énergétique du procédé. Selon cette variante, un signal d'émission excite l'un des transducteurs qui génère un signal ultrasonore en direction de l'autre transducteur. Le signal affecté d'un déphasage ultrasonore que l'on cherche à déterminer est reçu par l'autre transducteur, converti en signal électrique et amplifié.

Lors de l'itération d'ordre n, un compteur diviseur de fréquence C7, externe au microcontroleur, est préchargé en fonction du retard programmable $\tau p(n-1)$ qui a été déterminé lors de l'itération précédente.

Lorsque la durée de décomptage expire, ce compteur libère un signal carré dit de mélange à une fréquence Fq/98 proche de la fréquence Fac (ex : 39kHz) obtenue par division de la fréquence Fq de l'horloge.

Le signal de mélange et le signal électrique amplifié issu du signal ultrasonore sont introduits dans un mélangeur 52 du type pont de transistors.

Après hétérodynage, le signal obtenu dit mélangé possède une fréquence réduite de 1 kHz et passe dans un filtre passe-bas 54 afin d'éliminer la fréquence double à (40 + 39) kHz soit 79kHz.

De manière analogue à ce qui a déjà été décrit en référence à la figure 6, au bout d'un temps prédéterminé fixe choisi en fonction de l'estimée du temps de propagation du signal ultrasonore, le signal d'échantillonnage est libéré et l'échantillonnage du signal hétérodyné et filtré a lieu à la fréquence Fe par exemple à 4kHz.

Les étapes de détection synchrone sont ensuite effectuées sur les valeurs mémorisées du signal ainsi échantillonné conformément aux étapes de la figure 2.

Le retard programmable $\tau p(n)$ est ensuite déterminé en fonction de la différence de phase $\varphi err(n)$ entre la phase du signal échantillonné lors de l'itération d'ordre n et la phase de référence et sera appliqué au compteur diviseur de fréquence C7 à la prochaine itération d'ordre n+1 pour une émission de signal ultrasonore dans le même sens de propagation.

Pour réduire la consommation énergétique occasionnée par le procédé selon l'invention avec une fréquence d'échantillonnage quelconque, la fréquence d'échantillonnage Fe est fixée à une valeur égale à 4 Fac.

Avec une telle fréquence, les valeurs des sinus et cosinus de référence mémorisées dans la mémoire morte MEM2 conserveront les valeurs +1, 0, -1, 0, +1,... ce qui permettra de supprimer les opérations de multiplication dans l'étape l de la détection synchrone (figure 2).

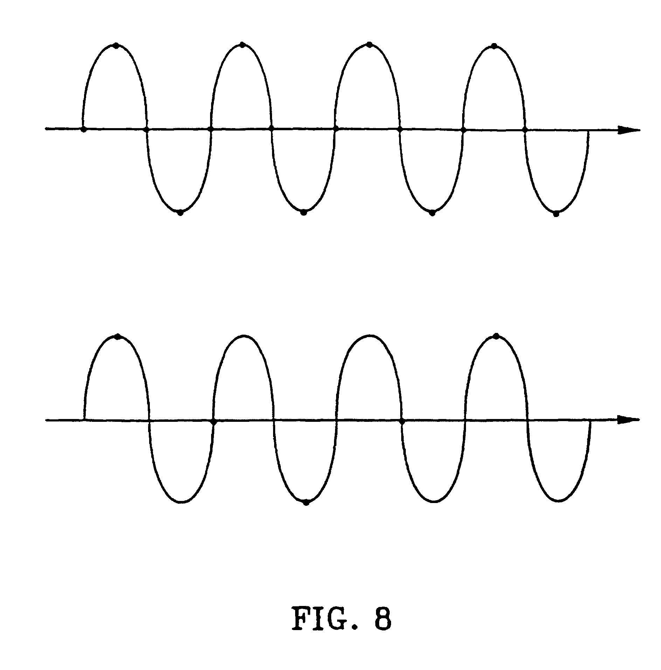

Ceci est illustré par la courbe du haut, sur la figure 8, sur laquelle les points représentent les valeurs des sinus et cosinus de référence lorsque l'échantillonnage s'effectue à la fréquence 4Fac.

En fixant la fréquence d'échantillonnage Fe à une valeur égale à 4Fac /2n+1 où n est non nul (sous-échantillonnage), on conserve également les valeurs +1, O, -1, 0, +1,... et l'on obtient une consommation énergétique davantage réduite.

Cette fréquence d'échantillonnage peut être utilisée dans les variantes représentées aux figures 4, 5 et 6.

Pour une fréquence Fe égale à 4Fac / 3, (n=1), on obtient les valeurs des sinus et cosinus de référence représentées par les points de la courbe du bas de la figure 8.

La fréquence d'échantillonnage est cependant limitée ce qui signifié que 2n+1 ne peut prendre n'importe quelle valeur. En effet, dans le spectre fréquentiel du signal échantillonné, si la largeur entre deux raies consécutives du signal échantillonné est inférieure à la largeur de bande du signal alors on introduit une erreur dans la mesure de phase par repliement de spectre.

Par conséquent, la fréquence d'échantillonnage Fe ne peut adopter une valeur pour laquelle la largeur de bande du signal est supérieure à la largeur entre deux raies consécutives du signal échantillonné.

Ainsi, par exemple, si le signal ultrasonore a une fréquence de 100 kHz, et une largeur de bande de 10kHz, la différence 2Fac/2n+1 entre deux raies consécutives doit être supérieure à 10kHz ce qui fixe la limite : 2n+1 < 20. La fréquence Fe est donc supérieure à 20kHz.

Il convient de noter que l'utilisation d'une fréquence d'échantillonnage Fe égale à 4Fac / 2n+1, avec $n \neq 0$, pour réduire la consommation énergétique est également applicable à un procédé de mesure ultrasonore d'un débit de fluide de l'art antérieur dans lequel on détermine le déphasage acoustique par détection synchrone sans introduire de déphasage programmable.

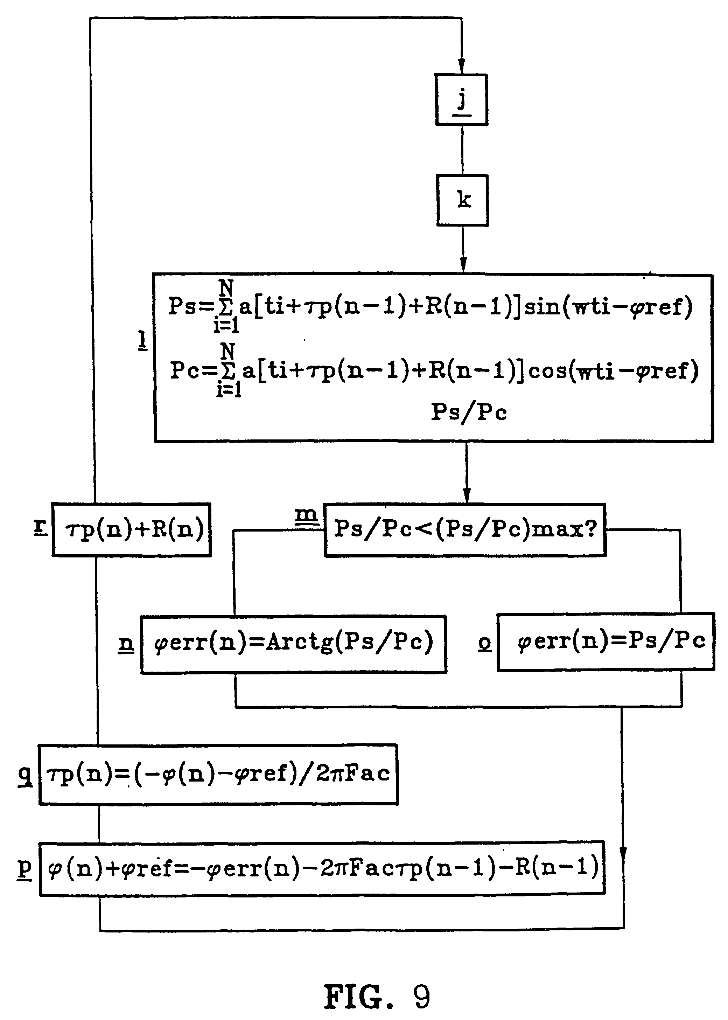

Une autre variante de réalisation est illustrée par les figures 9 à 11. Cette variante est utile lorsque le signal acoustique échantillonné contient de l'énergie provenant de raies harmoniques parasites à des fréquences Fp telles que

Fp ± KFe = Fac par suite d'un repliement de spectre.

Ceci est par exemple le cas lorsque l'amplificateur 32 des figures 3, 4, 5, 6 et 7 est alimenté avec des tensions relativement faibles de l'ordre de 3 V et l'on observe un phénomène de distorsion harmonique qui fait apparaître les raies parasites.

Le passage qui suit va permettre de mieux comprendre l'incidence de ces raies parasites sur la mesure du débit de fluide.

Si l'on suppose que le signal acoustique reçu est une sinusoïde à 40 kHz, que le signal acoustique amplifié contient une raie parasite à 120 kHz avec une amplitude Ap et que les phases des deux signaux sont égales et nulles, ledit signal acoustique s'écrit :

$$Y = \cos(2\pi t/Tac) + Ap \cos(6\pi t/Tac)$$

où Tac est la période du signal acoustique (Tac = 25µs).

Si la fréquence d'échantillonnage Fe est égale à 160 kHz, les valeurs du signal Y échantillonnées sur une période sont égales à :

$$Y1 = + \cos(2\pi \ \tau p(n-1)/Tac) + Ap \cos(6\pi \ \tau p(n-1)/Tac)$$

$$Y2 = - \sin(2\pi \ \tau p(n-1)/Tac) + Ap \sin(6\pi \ \tau p(n-1)/Tac)$$

$$Y3 = - \cos(2\pi \ \tau p(n-1)/Tac) - Ap \cos(6\pi \ \tau p(n-1)/Tac)$$

$$Y4 = + \sin(2\pi \ \tau p(n-1)/Tac) - Ap \sin(6\pi \ \tau p(n-1)/Tac)$$

où $\tau p(n-1)$ désigne le retard programmable tel que défini en référence à la figure 2 lors de l'itération d'ordre n-1. L'étape l de détection synchrone de la figure 2 fournit les valeurs :

$$Ps = -2\sin(2\pi \ \tau p(n-1)/Tac) + 2 Ap \sin(6\pi \ \tau p(n-1)/Tac)$$

$$Pc = 2\cos(2\pi \ \tau p(n-1)/Tac) + 2 Ap \cos(6\pi \ \tau p(n-1)/Tac)$$

Suivant l'étape n, la différence de phase entre la phase du signal échantillonné et la phase de référence est donnée par :

$$\varphi err(n) = Arctg(Ps/Pc)$$

En supposant que l'amplitude Ap est faible, $\varphi err(n)$ peut s'écrire

$$\varphi err(n) = Arctg[ -tg(2\pi \ \tau p(n-1)/Tac)(1 - 4 Ap \cos(4\pi \ \tau p(n-1)/Tac))]$$

En effectuant un développement limité de la fonction Arctangente autour de la valeur -tg $(2\pi \ \tau p(n-1)/Tac)$, on trouve

$$\varphi err(n) = -(2\pi \ \tau p(n-1)/Tac) - \frac{4 Ap \cos(4\pi \ \tau p(n-1)/Tac) \ tg(2\pi \ \tau p(n-1)/Tac)}{1 + tg^2(2\pi \ \tau p(n-1)/Tac)}$$

soit$\varphi$ err(n) = -(2\pi \ \tau p(n-1)/Tac) - Ap \sin(8\pi \ \tau p(n-1)/Tac)

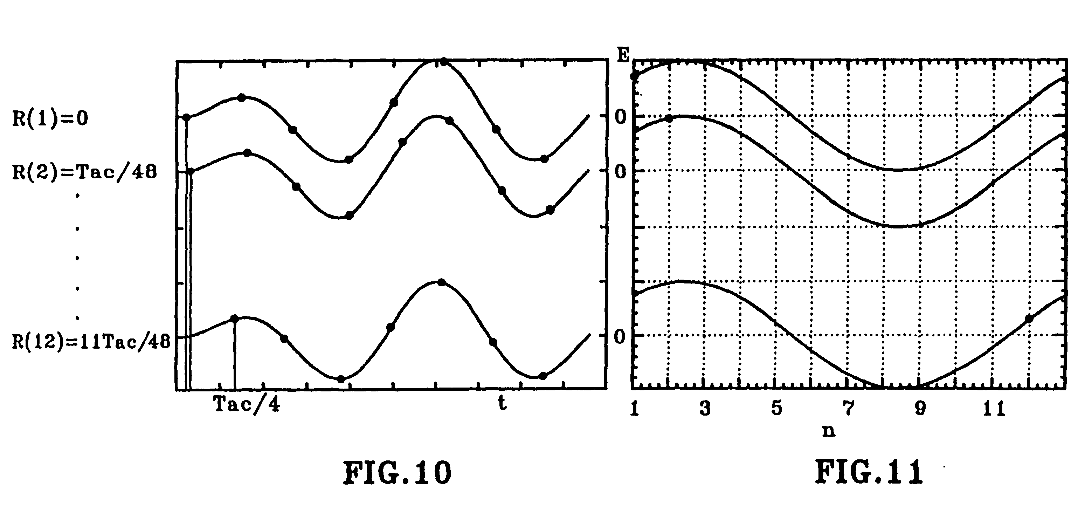

L'erreur introduite par la présence de la raie à 120 kHz se retrouve dans le second terme de la dernière expression de φerr(n) qui est une fonction sinusoïdale de période égale à Tac/4 (Fig.11).

Pour une amplitude Ap égale à 0,01, l'erreur peut atteindre une valeur maximale de 0,57° (=0,01 x 180 / π) ce qui est tout à fait inacceptable lorsque l'on recherche une précision de l'ordre de 0,015° pour certaines applications.

La loi d'erreur étant une fonction périodique à moyenne nulle, la Demanderesse s'est aperçue que l'on pouvait s'affranchir de cette erreur par moyennage d'un certain nombre de tirs acoustiques réalisés de la façon suivante : dans l'organigramme de la figure 9, l'étape r a été modifiée par rapport à celle de la figure 2 pour ajouter au retard programmable τp(n) obtenu à l'étape q un retard supplémentaire R(n). Les différentes valeurs R(1), R(2) ... varient entre 0 et la période d'échantillonnage Tac/4 lorsque la fréquence d'échantillonnage Fe est égale à quatre fois la fréquence acoustique Fac, ce qui revient à dire que l'on fait "glisser" les points d'échantillonnage sur un quart de la courbe sinusoïdale correspondant au signal acoustique. Par exemple, les différentes valeurs de R(n) varient linéairement par pas de Tac/(48) comme 0, Tac/(48), 2Tac/(48),... (Fig.10). En appliquant à chaque itération un retard égal à Tac/48 (Fig. 10) on obtient une erreur de phase correspondante E qui décrit une courbe sinusoïdale à moyenne nulle comme le montre la disposition des points obtenus sur la figure 11.

Au bout de 12 tirs, lorsque la période d'échantillonnage et la période de la courbe d'erreur de phase E ont été parcourues, les termes dûs à la présence de la raie à 120 kHz s'éliminent lorsque l'on fait la moyenne des phases. Il en est de même des raies parasites à d'autres fréquences harmoniques. Lors du treizième tir, la valeur de R est réinitialisée à 0 et la procédure est répétée.

Il convient de noter que les différentes valeurs de R(n) doivent s'étaler sur au moins une période d'échantillonnage Tac/4.

Toutefois, lorsque la fréquence d'échantillonnage est différente de 4Fac les différentes valeurs de R(n) doivent s'étaler sur au moins une période d'échantillonnage Tac/(Fe/Fac) et sont égales à des fractions de Tac/(Fe/Fac), les valeurs de R(n) variant linéairement par pas deTac/(Fe/Fac).

Cette variante est applicable avec tous les modes de réalisation et variantes décrits précédemment.

## Revendications

1. Procédé de mesure d'un débit de fluide entre deux points espacés dans la direction d'un écoulement du fluide selon lequel le débit est obtenu en combinant une mesure des temps de propagation respectifs de chacun des deux signaux acoustiques émis entre les deux points dans des sens opposés avec une mesure des déphasages acoustiques respectivement induits dans chaque signal acoustique par la propagation de chacun desdits signaux acoustiques dans l'écoulement, la mesure du déphasage acoustique induit dans chaque signal acoustique consistant à échantillonner ledit signal acoustique reçu à une fréquence dite d'échantillonnage, à numériser le signal échantillonné et à déterminer par détection synchrone le déphasage acoustique comme étant la différence de phase entre la phase du signal échantillonné et la phase d'un signal de référence, **caractérisé en ce que**, l'on procède par itérations successives sur les différents signaux acoustiques émis successivement dans le même sens de propagation, en introduisant lors d'une itération d'ordre n+1 dans l'un desdits signaux, entre l'étape d'émission du signal et l'étape de détection synchrone, au moins un déphasage programmable τp(n) asservi à la valeur du déphasage acoustique φ(n)+φref déterminée par détection synchrone effectuée lors de l'itération précédente d'ordre n, sur le signal émis précédemment, et qui est égale à la somme, d'une part, de la différence de phase φerr(n) entre la phase du signal échantillonné lors de l'itération précédente d'ordre n et la phase du signal de référence et, d'autre part, du déphasage programmable introduit lors de l'itération d'ordre n, 2πFacτp(n-1) où Fac représente la fréquence du signal acoustique et τp(n-1) représente le retard programmable déterminé à l'itération d'ordre n-1, de telle manière que l'étape de détection synchrone de l'itération d'ordre n+1 détermine une différence de phase φerr(n+1) entre la phase du signal échantillonné lors de l'itération en cours et la phase de référence qui soit aussi proche de zéro que possible, le déphasage acoustique φ(n+1)+φref étant ainsi sensiblement égal au déphasage programmable introduit lors de l'itération d'ordre n+1, 2πFacτp(n).

2. Procédé selon la revendication 1, selon lequel le déphasage programmable est introduit lors de l'étape d'échantillonnage dans le signal dit d'échantillonnage.

3. Procédé selon la revendication 1, selon lequel ,lors de l'étape de détection synchrone, le signal numérisé est multiplié par des signaux de référence ayant la forme respective d'un sinus et d'un cosinus dits de référence qui possèdent la phase dite de référence, le déphasage programmable étant introduit dans les sinus et cosinus de référence .

4. Procédé selon la revendication 1 selon lequel le déphasage programmable est introduit lors de l'étape d'émission, dans un signal dit d'émission qui est destiné à générer le signal acoustique correspondant.

**5.** Procédé selon la revendication 1, selon lequel chaque signal acoustique reçu est mélangé avec un signal dit de mélange afin d'obtenir un signal dit mélangé dont la fréquence est réduite par rapport à la fréquence dudit signal acoustique, le déphasage programmable étant introduit dans le signal de mélange.

**6.** Procédé selon l'une des revendications 1 à 5, selon lequel le déphasage programmable est décomposé en au moins deux sous déphasages programmables introduits dans le signal, chacun à une étape distincte, entre l'étape d'émission du signal acoustique et l'étape de détection synchrone.

**7.** Procédé selon la revendication 6, selon lequel chaque sous déphasage programmable est déterminé en effectuant la division euclidienne du déphasage programmable modulo la résolution du déphaseur programmable associé à l'étape correspondante à laquelle sera introduit ledit sous déphasage.

**8.** Procédé selon la revendication 6, lorsque celle-ci dépend uniquement de la revendication 1, et selon la revendication 7, selon lequel le déphasage programmable est décomposé en deux sous déphasages programmables introduits respectivement dans le signal d'échantillonnage et dans les sinus et cosinus de référence .

**9.** Procédé selon l'une des revendications 1 à 8, selon lequel la fréquence d'échantillonnage Fe est égale à 4Fac / 2n+1, où Fac représente la fréquence du signal acoustique et n est un entier supérieur ou égal à zéro.

**10.** Procédé selon la revendication 9, selon lequel la fréquence d'échantillonnage Fe est égale à 4Fac.

**11.** Procédé selon les revendications 8 à 10, selon lequel le déphasage programmable est sensiblement égal à m (Fac/Fq)360° + k(Fac/Fe)360° où (Fac/Fq)360° représente la résolution du déphaseur programmable associé aux sinus et cosinus de référence et (Fac/Fe)360° représente la résolution due à l'échantillonnage, Fq représentant la fréquence du quartz de l'horloge.

**12.** Procédé selon les revendications 8 et 9, selon lequel la fréquence d'échantillonnage Fe, est égale à 4Fac/2n+1 avec n strictement supérieur à zéro.

**13.** Procédé selon l'une des revendications 1 à 12, selon lequel les étapes d'échantillonnage et de numérisation sont effectuées simultanément.

**14.** Procédé selon l'une des revendications 1 à 13, selon lequel le débit de fluide s'exprimant en fonction du rapport d'un premier terme qui est égal à la somme, d'une part, de $2\pi[Fac(T2-T1)]$, où [x] désigne la partie entière de x et où T1 et T2 sont les temps de propagation respectifs des signaux acoustiques émis dans les deux sens de propagation, Fac étant la fréquence des signaux acoustiques et, d'autre part, de la différence des déphasages acoustiques induits dans chaque signal, sur un second terme qui est égal au produit desdits temps de propagation, on effectue une mesure des temps de propagation par une méthode différente pour chacun des termes.

**15.** Procédé selon la revendication 14, selon lequel, on mesure les temps de propagation des signaux acoustiques dans le premier terme plus fréquemment que pour ceux du second terme.

**16.** Procédé selon les revendications 14 et 15, selon lequel, on mesure les temps de propagation des signaux acoustiques dans le second terme lorsque la moyenne des temps de propagation émis dans les deux sens de propagation et exprimés dans le premier terme dépasse un seuil prédéterminé.

**17.** Procédé selon les revendications 14 et 15, selon lequel, on mesure les temps de propagation des signaux acoustiques dans le second terme lorsque le nombre de mesures de déphasages acoustiques atteint un nombre maximal prédéterminé .

**18.** Procédé selon les revendications 16 et 17, selon lequel, on mesure les temps de propagation des signaux acoustiques dans le second terme lorsque la première des deux conditions est satisfaite.

**19.** Procédé selon l'une des revendications 14 à 18, selon lequel, pour mesurer le temps de propagation des signaux acoustiques émis dans les deux sens de propagation dans le premier terme, pour chaque signal, on redresse ledit signal reçu, on forme l'enveloppe de ce signal reçu et l'on détermine ledit temps de propagation en repérant l'instant de passage de ladite enveloppe par un seuil prédéterminé.

20. Procédé selon l'une des revendications 14 à 19, selon lequel, pour mesurer le temps de propagation des signaux acoustiques émis dans les deux sens de propagation dans le second terme, on compare les valeurs des amplitudes de chacun desdits signaux acoustiques aux points échantillonnés à une valeur dite de seuil, on recherche le premier point échantillonné du signal dont la valeur est supérieure à la ladite valeur seuil et, à partir de ce point, on recherche le prochain ou le dernier passage à zéro du signal, ce qui détermine ainsi le temps de propagation dudit signal acoustique à un temps constant près qui est le même pour les deux temps de propagation.

21. Procédé selon la revendication 20, selon lequel, pour rechercher le prochain passage à zéro du signal, on recherche les deux points échantillonnés consécutifs suivants qui encadrent le point du signal pour lequel la valeur de l'amplitude est nulle et l'on procède alors à une interpolation linéaire entre ces deux points pour déterminer le temps de propagation du signal acoustique.

22. Procédé selon l'une des revendications 1 à 21, selon lequel à chaque itération d'ordre n on ajoute au retard programmable τp(n) un retard programmable supplémentaire R(n) qui va induire sur plusieurs itérations successives une erreur de phase E due au repliement de raies harmoniques après échantillonnage, répartie suivant une loi périodique à moyenne nulle.

23. Procédé selon la revendication 22, selon lequel le retard programmable supplémentaire varie ente 0 et la période déchantillonnage.

24. Procédé selon la revendication 23, selon lequel les valeurs du retard programmable supplémentaire varient linéairement par pas égaux à une fraction de la période d'échantillonnage.

**Claims**

1. Measuring method of a fluid flow between two points positioned at a certain distance from each other, in the direction of the fluid flow in which the flow rate is obtained by combining the respective propagation times of each one of the two acoustic signals transmitted between the two points in opposite directions, using the measurements of acoustic phase shifts respectively induced in each acoustic signal through the propagation of each of the said acoustic signals in the flow, the measurement of acoustic phase shifts induced in each acoustic signal consisting in sampling the said acoustic signal received at a frequency called sampling, digitizing the sampled signal and determining the acoustic phase shift through synchronous detection, the shift being considered as the phase difference between the sampled signal phase and a reference signal phase, featuring the fact that this is obtained by consecutive iterations on the various acoustic signals transmitted consecutively in the same propagation direction, by introducing into one of the said signals during an order iteration n+1, between the signal transmission stage and the synchronous detection stage, at least one programmable phase shift τp(n) conditioned by the value of the acoustic phase shift φ(n)+φref determined by synchronous detection performed during the previous order iteration n, on the signal transmitted previously, and that is equal to the sum, on one hand, of the phase difference φerr(n) between the sampled phase shift during the previous order iteration n, and the reference signal phase, and on the other hand, of the programmable phase shift introduced during the order iteration n. $2\pi Fac\ \tau p(n.-1)$, where Fac represents the acoustic signal frequency, and τp(n.-1) represents the programmable delay determined at order iteration n-1, so that the synchronous detection stage of the order iteration n+1 determines a phase difference φerr(n+1) between the sampled signal phase during the iteration underway, and the reference phase that must be as close to zero as possible; the acoustic phase shift φ(n)+φref being practically equal to the programmable phase shift introduced during the order iteration n+1 $2\pi Fac\ \tau p(n)$.

2. Method as claimed in claim N°1, in which a programmable phase shift is introduced in the so-called sampling signal during the sampling stage.

3. Method as claimed in claim N°1, in which, during the synchronous detection stage, the digitized signal is multiplied by the reference signals with the respective forms of a so-called reference sine and cosine that possess the so-called reference phase, the programmable phase shift being introduced into the reference sine and cosine.

4. Method as claimed in claim 1, in which during the transmission stage, the programmable phase shift is introduced into a so-called transmission signal that is destined to generate the corresponding acoustic signal.

**5.** Method as claimed in claim 1 in which each received acoustic signal is mixed with a so-called mixing signal in order to obtain a so-called mixed signal whose frequency is reduced compared to the frequency of the acoustic signal in question, the programmable phase shift being introduced into the mixing signal.

**6.** Method as claimed in claims 1 to 5, in which the programmable phase shift is broken down into at least two programmable sub phase shifts introduced into the signal, each one during a separate stage, between the acoustic signal transmission stage and the synchronous detection stage.

**7.** Method as claimed in claim 6, in which each programmable sub phase shift is determined by Euclidian division of the programmable phase shift keying the resolution of the programmable phase shifter associated with the stage that corresponds with the one in which the said sub phase shift will be introduced.

**8.** Method as claimed in claim 6, in the case where this claim depends only on claim 1, and according to claim 7, in which the programmable phase shift is broken down into two programmable sub phase shifts introduced respectively into the sampling signal and the reference sine and cosine.

**9.** Method as claimed in claims 1 to 8, in which the sampling frequency Fe is equal to 4Fac/2n+1, where Fac represents the acoustic signal frequency, and n is a complete value greater than or equal to zero.

**10.** Method as claimed in claim 9, in which the sampling frequency Fe is equal to 4Fac.

**11.** Method as claimed in claims 8 to 10 in which the programmable sub phase shift is practically equal to m(Fac/Fq)360°+k(Fac/fe)360°, where(Fac/Fq)360° represents the resolution, of the programmable phase shift associated with the reference sine and cosine and (fac/fe)360° represents the resolution caused by sampling, Fq representing the quartz crystal clock frequency.

**12.** Method as claimed in claims 8 and 9 in which the sampling frequency Fe is equal to 4fac/2n+1 where n is absolutely greater than zero.

**13.** Method as claimed in one of the claims 1 to 12 in which the sampling and digitizing stages are performed simultaneously.

**14.** Method as claimed in one of the claims 1 to 13, where the fluid flow is expressed according to the ratio of a first term that is equal to the sum, on one hand, of $2\pi$[Fac(T2-T1)], where [x] signifies the entire x value, and where T1 and T2 are the respective propagation times of the acoustic signals transmitted in the two propagation directions, Fac being the frequency of the acoustic signals, and on the other hand, of the difference of the acoustic phase shifts induced in each signal, on a second term that is equal to the product of the propagation times in question; propagation time is measured using a different method for each term.

**15.** Method as claimed in claim 14 in which the propagation time of the acoustic signals is measured in the first term more frequently than those of the second term.

**16.** Method as claimed in claims 14 and 15 in which the propagation times of the acoustic signals are measured in the second term when the average propagation time transmitted in the two propagation directions and expressed in the first term exceeds a pre-established threshold.

**17.** Method as claimed in claims 14 and 15 in which the propagation times of the acoustic signals are measured in the second term when the number of acoustic phase shift measurements have reached the maximum pre-established number.

**18.** Method as claimed in claims 16 and 17 in which the acoustic signal propagation times are measured in the second term when the first of the two conditions is satisfied.

**19.** Method as claimed in claims 14 to 18 in which in order to measure the propagation time of the acoustic signals transmitted in both propagation directions in the first term, for each signal the said received signal is rectified, an envelope is formed on the said received signal, and the said propagation time is determined by identifying the instant that said envelope is crossed by a pre-established threshold.

**20.** Method as claimed in claims 14 to 19 in which in order to measure the propagation time of the acoustic signals transmitted in both propagation directions in the second term, the amplitude values of each of the said acoustic signals are compared to the sampled points at a value called threshold, a search is made for the first sampled signal point whose value is greater than the said threshold value, and from this point, a search is made for the next or previous signal zero crossing to determine the propagation time of said acoustic signal at a practically constant time that is the same for both propagation times.

**21.** Method as claimed in claim 20 in which in order to search for the next signal zero crossing, a search is made for the two consecutive sampled points that enclose the signal point for which the amplitude value is null, followed by a linear interpolation between the two points to determine the propagation time of the acoustic signal.

**22.** Method as claimed in one of the claims between 1 and 21 in which a supplementary programmable delay R(n) is added to the programmable delay τp(n) at each order iteration n, which will result in inducing a phase error E on several successive iterations, caused by the filling of harmonic lines after sampling, arranged according to a periodic law with an average of null.

**23.** Method as claimed in claim 22 in which the supplementary programmable delay varies between 0 and the sampling period.

**24.** Method as claimed in claim 23 in which the values of the supplementary programmable delay vary in line by steps equal to a fraction of the sampling period.

**Patentansprüche**

**1.** Messverfahren eines Fluiddurchsatzes zwischen zwei entfernt liegenden Punkten in der Richtung einer Strömung des Fluids, hierbei erhält man den Durchsatz durch die Kombination einer Messung der jeweiligen Ausbreitungsgeschwindigkeiten von zwei akustischen Signalen, die zwischen den beiden Punkten in entgegengesetzten Richtungen gesendet werden, mit einer Messung der akustischen Phasenverschiebungen, die jeweils in jedem akustischen Signal über die Ausbreitung von jedem der oben genannten akustischen Signale in der Strömung induziert werden; die Messung der in jedem akustischen Signal induzierten akustischen Phasenverschiebung besteht hierbei darin, das oben genannte empfangene akustische Signal abzutasten und durch synchrone Ermittlung die akustische Phasenverschiebung zu bestimmen, wobei diese die Phasendifferenz zwischen der Phase des abgetasteten Signals und der Phase eines Bezugssignals ist, die sich dadurch charakterisiert, dass man durch sukzessive Iterationen an den verschiedenen sukzessiv in derselben Ausbreitungsrichtung abgesandten akustischen Signalen verfährt, und zwar mittels Einführen in einer Iteration der Zähligkeit n+1 in eines der oben genannten Signale zwischen der Etappe der Signalsendung und der Etappe der synchronen Ermittlung von mindestens einer programmierbaren Phasenverschiebung τp(n), die dem Wert der akustischen Phasenverschiebung φ(n) + φref unterliegt, bestimmt durch die synchrone Ermittlung während der vorhergehenden Iteration der Zähligkeit n am vorher gesandten Signal, und das der Summe entspricht, hervorgehend einerseits aus der Phasendifferenz φerr(n) zwischen der Phase des während der vorhergehenden Iteration der Zähligkeit n abgetasteten Signals und der Phase eines Bezugssignals, und andererseits aus der während der Iteration der Zähligkeit n eingeführten programmierbaren Phasenverschiebung, 2πFacτp(n-1), wobei Fac die Frequenz des akustischen Signals charakterisiert und τp(n-1) die während der Iteration der Zähligkeit n-1 bestimmte programmierbare Verzögerung, so dass die Etappe der synchronen Ermittlung der Iteration der Zähligkeit n+1 eine Phasendifferenz φerr(n+1) zwischen der Phase des während der laufenden Iteration abgetasteten Signals und der Bezugsphase bestimmt, die möglichst nah bei Null liegt, wodurch die akustische Phasenverschiebung φ(n+1)+ φref fast der während der Iteration der Zähligkeit n+1 eingeführten programmierbaren Phasenverschiebung 2πFacτp(n) entspricht.

**2.** Verfahren nach Anspruch Nr. 1, **dadurch gekennzeichnet, dass** die programmierbare Phasenverschiebung während der Etappe der Abtastung in das sogenannte Abtastsignal eingeführt wird.

**3.** Verfahren nach Anspruch Nr. 1, **dadurch gekennzeichnet, dass** während der Etappe der synchronen Ermittlung das digitalisierte Signal multipliziert wird mit den Bezugssignalen in der jeweiligen Form eines sogenannten Bezugs-Sinus und -Kosinus, die über die sogenannte Bezugsphase verfügen, und wobei die programmierbare Phasenverschiebung in die Bezugs-Sinus und -Kosinus eingeführt wird.

**4.** Verfahren nach Anspruch Nr. 1, **dadurch gekennzeichnet, dass** die programmierbare Phasenverschiebung während der Sendeetappe in ein sogenanntes Sendesignal eingeführt wird, das seinerseits dazu dient, das entsprechende akustische Signal zu generieren.

5. Verfahren nach Anspruch Nr. 1, **dadurch gekennzeichnet, dass** jedes empfangene akustische Signal mit einem sogenannten Mischsignal gemischt wird, um ein sogenanntes gemischtes Signal mit reduzierter Frequenz im Vergleich zur Frequenz des oben genannten akustischen Signals zu erhalten, und wobei die programmierbare Phasenverschiebung in das Mischsignal eingeführt wird.

6. Verfahren nach einem der Ansprüche Nr. 1 bis 5, **dadurch gekennzeichnet, dass** die programmierbare Phasenverschiebung in mindestens zwei programmierbare Unterphasenverschiebungen unterteilt werden, die jeweils zu einer anderen Etappe eingeführt werden, und zwar zwischen der Etappe der Sendung des akustischen Signals und der Etappe der synchronen Ermittlung.

7. Verfahren nach Anspruch Nr. 6, **dadurch gekennzeichnet, dass** jede programmierbare Unterphasenverschiebung bestimmt wird durch die euklidische Teilung der programmierbaren Phasenverschiebung Modulo die Lösung des programmierbaren Phasenschiebers assoziiert mit der entsprechenden Etappe, in die die oben genannte Unterphasenverschiebung eingeführt wird.

8. Verfahren nach Anspruch Nr. 6, wenn dieser nur vom Anspruch Nr. 1 abhängt, und nach Anspruch Nr.7, **dadurch gekennzeichnet, dass** die programmierbare Phasenverschiebung in zwei programmierbare Unterphasenverschiebungen unterteilt wird, die jeweils in das Abtastsignal und in die Bezugs-Sinus und - Kosinus eingeführt werden.

9. Verfahren nach einem der Ansprüche Nr. 1 bis 8, **dadurch gekennzeichnet, dass** de Abtastfrequenz Fe gleich 4Fac / 2n+1 ist, wobei Fac die Frequenz des akustischen Signals und n eine ganze Zahl größer oder gleich Null ist.

10. Verfahren nach Anspruch Nr. 9, **dadurch gekennzeichnet, dass** die Abtastfrequenz Fe gleich 4Fac ist.

11. Verfahren nach Ansprüchen Nr. 8 bis 10, **dadurch gekennzeichnet, dass** die programmierbare Phasenverschiebung fast gleich m(Fac/Fq)360° + k(Fac/Fe)360° ist, (Fac/Fq)360° charakterisiert hierbei die Lösung des programmierbaren Phasenschiebers assoziiert mit den Bezugs-Sinus und -Kosinus, (Fac/Fe)360° ist hier die auf der Abtastung beruhende Lösung und Fq die Frequenz des Zeitgeberquarzes.

12. Verfahren nach Ansprüchen Nr. 8 und 9, **dadurch gekennzeichnet, dass** die Abtastfrequenz Fe gleich 4Fac/2n+1 ist, wobei n unbedingt größer als Null ist.

13. Verfahren nach einem der Ansprüche Nr. 1 bis 12, **dadurch gekennzeichnet, dass** die Etappen der Abtastung und der Digitalisierung simultan ausgeführt werden.

14. Verfahren nach einem der Ansprüche Nr. 1 bis 13, **dadurch gekennzeichnet, dass** sich der Fluiddurchsatz durch das Verhältnis eines ersten Terms ausdrückt, der einerseits gleich der Summe von (2π[Fac(T2 - T1)] ist, wobei [x] der ganze Teil von x ist, wobei T1 und T2 die jeweiligen Ausbreitungsgeschwindigkeiten der in die beiden Ausbreitungsrichtungen gesandten akustischen Signale sind, wobei Fac die Frequenz der akustischen Signale ist, und der andererseits gleich der Differenz der akustischen Phasenverschiebungen ist, die in jedem Signal induziert werden, zu einem zweiten Term, der dem Produkt der oben genannten Ausbreitungsgeschwindigkeiten entspricht, und somit die Messung der Ausbreitungsgeschwindigkeiten durch eine andere Methode für den ersten und den zweiten Term ausgeführt wird.

15. Verfahren nach Anspruch Nr. 14, **dadurch gekennzeichnet, dass** man die Ausbreitungsgeschwindigkeiten der akustischen Signale für den ersten Term häufiger als für den zweiten Term misst.

16. Verfahren nach Ansprüchen Nr. 14 et 15, **dadurch gekennzeichnet, dass** man die Ausbreitungsgeschwindigkeiten der akustischen Signale im zweiten Term misst, sobald das Mittel der Ausbreitungsgeschwindigkeiten, die in den beiden Ausbreitungsrichtungen gesendet und im ersten Term ausgedrückt werden, eine vorausbestimmte Schwelle überschreitet.

17. Verfahren nach Ansprüchen Nr. 14 und 15, **dadurch gekennzeichnet, dass** man die Ausbreitungsgeschwindigkeiten der akustischen Signale im zweiten Term misst, sobald die Anzahl der Messungen an akustischen Phasenverschiebungen eine vorausbestimmte maximale Anzahl erreicht.

**18.** Verfahren nach Ansprüchen Nr. 16 und 17, **dadurch gekennzeichnet, dass** man die Ausbreitungsgeschwindigkeiten der akustischen Signale im zweiten Term misst, sobald die erste der beiden Bedingungen erfüllt wird.

**19.** Verfahren nach einem der Ansprüche Nr. 14 bis 18, **dadurch gekennzeichnet, dass** zur Messung der Ausbreitungsgeschwindigkeiten der akustischen Signale, die in den beiden Ausbreitungsrichtungen im ersten Term gesendet werden, für jedes Signal das oben genannte gesandte Signal gleichgerichtet wird, die Enveloppe von diesem empfangenen Signal gebildet und die oben genannte Ausbreitungsgeschwindigkeit bestimmt wird, indem der Durchgangsmoment der oben genannten Enveloppe durch eine vorausbestimmte Schwelle ermittelt wird.

**20.** Verfahren nach einem der Ansprüche Nr. 14 bis 19, **dadurch gekennzeichnet, dass** zur Messung der Ausbreitungsgeschwindigkeiten der akustischen Signale, die in den beiden Ausbreitungsrichtungen im zweiten Term gesendet werden, man die Werte der Amplituden von jedem der oben genannten akustischen Signale an den Abtastpunkten mit einem sogenannten Schwellwert vergleicht, man den ersten Abtastpunkt des Signals ermittelt, dessen Wert größer als der oben genannte Schwellwert ist und man, ab diesem Punkt, den nächsten oder den letzten Nulldurchgang des Signals ermittelt, wodurch die Ausbreitungsgeschwindigkeit des oben genannten akustischen Signals auf eine konstante Zeit genau festgelegt wird, die gleich für die beiden Ausbreitungsgeschwindigkeiten ist.

**21.** Verfahren nach Anspruch Nr. 20, **dadurch gekennzeichnet, dass** zum Ermitteln des nächsten Nulldurchgangs vom Signal, man die beiden nächsten konsekutiven abgetasteten Punkte ermittelt, die den Punkt des Signals einfassen, für das der Amplitudenwert gleich Null ist und man eine lineare Interpolation zwischen diesen beiden Punkten realisiert, um die Ausbreitungsgeschwindigkeit des akustischen Signals zu bestimmen.

**22.** Verfahren nach einem der Ansprüche Nr. 1 bis 21, **dadurch gekennzeichnet, dass** bei jeder Iteration der Zähligkeit n der programmierbaren Verzögerung $\tau p(n)$ eine weitere programmierbare Verzögerung $R(n)$ hinzugefügt wird, die auf mehreren sukzessiven Iterationen einen Phasenfehler E induziert, dies aufgrund des Rückzugs von harmonischen Linien nach der Abtastung, verteilt gemäß eines periodischen Gesetzes mit dem Mittelwert Null.

**23.** Verfahren nach Anspruch Nr. 22, **dadurch gekennzeichnet, dass** die zusätzliche programmierbare Verzögerung zwischen 0 und der Abtastperiode variiert.

**24.** Verfahren nach Anspruch Nr. 23, **dadurch gekennzeichnet, dass** die Werte der zusätzlichen programmierbaren Verzögerung linear variieren und zwar in Schritten, die gleich einem Bruchteil der Abtastperiode sind.

FIG. 1

$$Ps=\sum_{i=1}^{N}a[ti+\tau p(n-1)]\sin(wti-\varphi ref)$$

$$Pc=\sum_{i=1}^{N}a[ti+\tau p(n-1)]\cos(wti-\varphi ref)$$

$$Ps/Pc$$

l

r | $\tau p(n)$

m | Ps/Pc<(Ps/Pc)max?

n | $\varphi err(n)=Arctg(Ps/Pc)$

o | $\varphi err(n)=Ps/Pc$

q | $\tau p(n)=(-\varphi(n)-\varphi ref)/2\pi Fac$

p | $\varphi(n)+\varphi ref=-\varphi err(n)-2\pi Fac\tau p(n-1)$

**FIG. 2**

**FIG. 2a**

**FIG. 2b**

FIG. 3

FIG. 3a

FIG. 3b

**FIG. 4**

**FIG. 4a**

FIG. 5

FIG. 6

FIG. 6a

FIG. 7

FIG. 8

FIG. 9

FIG.11

FIG.10